# EUROPEAN PATENT APPLICATION

(11) **EP 4 783 603 A1**
(43) Date of publication of application: **29.07.2026**
(21) Application number: 24868197.5
(22) Date of filing: 12.09.2024
(51) Int. Cl.: H04N 25/47, H04N 25/707, H04N 25/79

(54) **IMAGING DEVICE, DATA PROCESSING METHOD, INFORMATION PROCESSING DEVICE, INFORMATION PROCESSING METHOD, AND RECORDING MEDIUM**

(30) Priority: 22.09.2023 JP 2023158139
(71) Applicant: Sony Semiconductor Solutions Corporation, Atsugi-shi, Kanagawa 243-0014 (JP)
(72) Inventor: WATANABE, Goshi, Atsugi-shi, Kanagawa 243-0014 (JP)
(74) Representative: Müller Hoffmann & Partner
(86) International application number: PCT/JP2024/032641
(87) International publication number: WO 2025/063120

(57) **Abstract**

Included is a sensor unit including an event sensor portion which has event detection pixels for detecting a change of a light-receiving amount as an event arrayed two-dimensionally, and generates an event signal indicating a detection result of the event, an image pickup sensor portion which has image pickup pixels arrayed two-dimensionally and obtains a captured image, the image pickup pixels including photoelectric conversion elements and generating a light-receiving signal indicating a light-receiving amount, an event-related influence presence/absence data generation portion which generates, on the basis of a result of determining whether or not a readout operation by the image pickup sensor portion has been executed at a time of the event detection by the event sensor portion, event-related influence presence/absence data indicating presence/absence of an influence of noise with respect to the event signal, an image-pickup-related influence presence/absence data generation portion which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and a transmission portion which transmits the event-related influence presence/absence data and the image-pickup-related influence presence/absence data.

## Description

### Technical Field

The present technology relates to an image pickup device, a data processing method, an information processing apparatus, an information processing method, and a recording medium, more particularly, to a technology related to a countermeasure in a case where, regarding a sensor unit as a mixed sensor on which an event sensor portion and an image pickup sensor portion are mounted, noise components are included in event data obtained by the event sensor portion and captured image data obtained by the image pickup sensor portion.

### Background Art

For example, there is known an event sensor known as an EVS (Event-based Vision Sensor) or a DVS (Dynamic Vision Sensor), which detects a change of a light-receiving amount as an event. The event sensor is a sensor which has event detection pixels for detecting a change of a light-receiving amount as an event arrayed two-dimensionally, and generates an event signal indicating a detection result of the event.

Also as the event sensor, for example, there are sensors that take a form of a so-called mixed sensor, in which an image pickup sensor that obtains captured images including RGB (R: red, G: green, B: blue) images and/or the like is mounted within the same sensor unit (sensor device) (see, for example, Patent Literatures 1 and 2 below, etc.).

### Citation List

### Patent Literature

Patent Literature 1: WO 2020/158583
Patent Literature 2: WO 2023/106232

### Disclosure of Invention

### Technical Problem

Here, in the mixed sensor described above, since the event sensor and the image pickup sensor are arranged close to each other, a signal readout operation of one of the sensors may act as a noise source for the other one of the sensors. Specifically, there is a fear that a light-receiving signal readout operation of the image pickup sensor will become a noise source for the event sensor to thus induce an erroneous event detection, and that an event signal readout operation of the event sensor will become a noise source for the image pickup sensor to thus induce noise superposition with respect to captured images.

The present technology has been made in view of the circumstances as described above, and aims at enabling, in a case where event data and captured image data output by the sensor unit on which the event sensor and the image pickup sensor are mounted include noise components, a subsequent processing portion to perform appropriate noise countermeasure processing.

### Solution to Problem

An image pickup device according to the present technology includes: a sensor unit including an event sensor portion which has event detection pixels for detecting a change of a light-receiving amount as an event arrayed two-dimensionally, and generates an event signal indicating a detection result of the event, an image pickup sensor portion which has image pickup pixels arrayed two-dimensionally and obtains a captured image, the image pickup pixels including photoelectric conversion elements and generating a light-receiving signal indicating a light-receiving amount, an event-related influence presence/absence data generation portion which generates, on the basis of a result of determining whether or not a readout operation by the image pickup sensor portion has been executed at a time of the event detection by the event sensor portion, event-related influence presence/absence data indicating presence/absence of an influence of noise with respect to the event signal, an image-pickup-related influence presence/absence data generation portion which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and a transmission portion which transmits the event-related influence presence/absence data and the image-pickup-related influence presence/absence data.

With the configuration described above, for the sensor unit as the mixed sensor on which the event sensor portion and the image pickup sensor portion are mounted, it is possible to output the influence presence/absence data indicating the presence/absence of the influence of the noise source with respect to the subsequent processing portion, in correspondence with a case where noise components are included in event data obtained by the event sensor portion and captured image data obtained by the image pickup sensor portion.

An information processing apparatus according to the present technology includes: a data processing portion which is input with, from a sensor unit including an event sensor portion which has event detection pixels for detecting a change of a light-receiving amount as an event arrayed two-dimensionally, and generates an event signal indicating a detection result of the event, an image pickup sensor portion which has image pickup pixels arrayed two-dimensionally and obtains a captured image, the image pickup pixels including photoelectric conversion elements and generating a light-receiving signal indicating a light-receiving amount, an event-related influence presence/absence data generation portion which generates, on the basis of a result of determining whether or not a readout operation by the image pickup sensor portion has been executed at a time of the event detection by the event sensor portion, event-related influence presence/absence data indicating presence/absence of an influence of noise with respect to the event signal, an image-pickup-related influence presence/absence data generation portion which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and a transmission portion which transmits the event-related influence presence/absence data and the image-pickup-related influence presence/absence data, at least one of event data obtained on the basis of the event signal or captured image data obtained on the basis of the light-receiving signal, and performs, as processing that targets input data as the data that has been input, processing that is based on influence presence/absence data corresponding to the input data out of the event-related influence presence/absence data and the image-pickup-related influence presence/absence data.

As a result, the processing that is based on the corresponding influence presence/absence data is performed at a subsequent stage of the sensor unit, for at least one of the event data or the captured image data obtained by the sensor unit as the mixed sensor.

### Brief Description of Drawings

[Fig. 1] ] A block diagram showing an overall configuration example of an image pickup device according to an embodiment.
[Fig. 2] A diagram showing an example of a mounting form of an event sensor portion and an image pickup sensor portion according to the embodiment.
[Figs. 3] Explanatory diagrams showing noise superimposed on a captured image of the image pickup sensor portion in accordance with a readout operation by the event sensor portion.
[Fig. 4] A block diagram for explaining a configuration example of a sensor unit according to a first embodiment.
[Fig. 5] A diagram showing an area division example of a sensing surface.
[Fig. 6] A diagram showing an example of event-side statistical information.
[Fig. 7] A diagram showing an example of image-pickup-side statistical information.
[Fig. 8] A diagram showing a structure example of transmission data of captured image data.
[Fig. 9] A diagram showing a structure example of transmission data of event data.
[Fig. 10] A diagram showing a storage example of the event-side statistical information in the transmission data of event data.
[Fig. 11] A diagram showing a storage example of the image-pickup-side statistical information in the transmission data of captured image data.
[Fig. 12] An explanatory diagram of another example of the area division.
[Fig. 13] A flowchart showing a flow of processing executed by the sensor unit to transmit the event data and the event-side statistical information to a subsequent stage.
[Fig. 14] A diagram showing a data structure example of the image-pickup-side statistical information indicating presence/absence of an influence of noise for each image pickup pixel.
[Figs. 15] Diagrams for explaining a data structure example of the image-pickup-side statistical information in a case where statistical information related to the presence/absence of the influence of noise is indicated for each pixel group for one horizontal line.
[Fig. 16] A diagram showing a data structure example of the statistical information in a case where area definition information is included.
[Fig. 17] A diagram for explaining a data structure example of the event-side statistical information when indicating temporal statistics.
[Fig. 18] An explanatory diagram showing a data structure example of the transmission data in a case where the statistical information is stored for each minimum unit data.
[Fig. 19] A diagram showing a data structure example of the statistical information in a case where the statistical information is stored for each minimum unit data.
[Fig. 20] A block diagram for explaining a configuration example of an image pickup device according to a second embodiment.
[Fig. 21] An explanatory diagram showing a mounting example of an electronic circuit portion according to the second embodiment.
[Fig. 22] An explanatory diagram showing an example in which the event sensor portion and the image pickup sensor portion are formed in the same semiconductor layer.
[Fig. 23] An explanatory diagram showing a mounting form in which image pickup pixels and event detection pixels are mixed in the same pixel array portion.
[Fig. 24] A block diagram for explaining a configuration example of an image pickup device as a modified example.
[Fig. 25] A diagram showing a data structure example of a transmission frame according to the modified example.
[Fig. 26] A block diagram for explaining an example of a countermeasure configuration that takes into account saturation of event detection in the event sensor portion. Modes for Carrying Out the Invention
Hereinafter, embodiments according to the present technology will be described in the following order with reference to the attached drawings.

### <1. First embodiment>

[1-1. Overall configuration example of image pickup device]
[1-2. Internal configuration example of sensor unit]
[1-3. Processing procedures]
[1-4. Countermeasure processing of subsequent stage]
[1-5. Other examples of transmission data]

### <2. Second embodiment>

### <3. Modified examples>

### <4. Summary of embodiments>

### <5. Present technology>

### <1. First embodiment>

### [1-1. Overall configuration example of image pickup device]

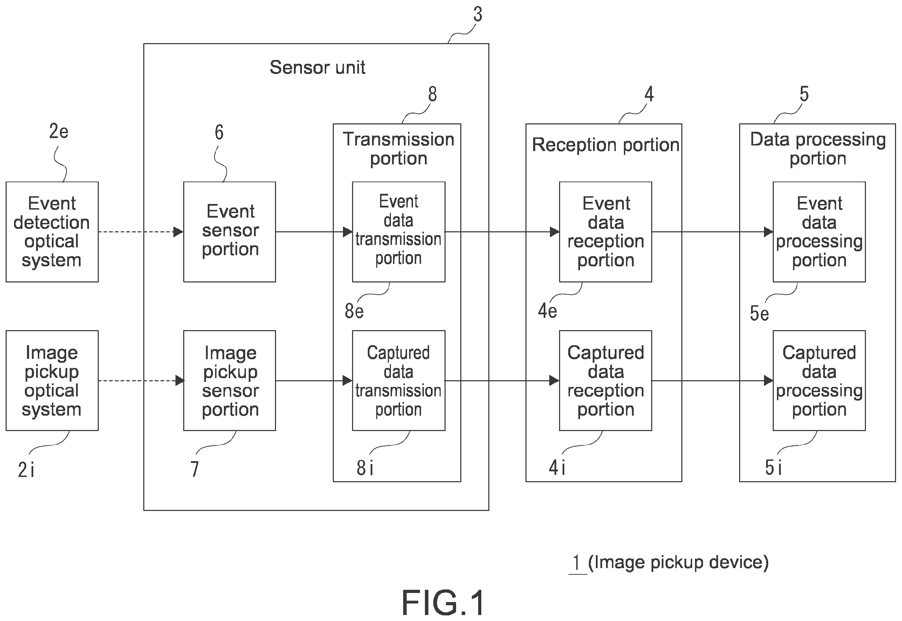

Fig. 1 is a block diagram showing an overall configuration example of an image pickup device 1, which is an embodiment of an image pickup device according to the present technology.

The image pickup device 1 includes, as a sensor unit 3 for sensing a subject, a sensor device in a form of a so-called mixed sensor on which an event sensor portion 6 for detecting an event, that is a change of a light-receiving amount of a predetermined amount or more, and an image pickup sensor portion 7 for obtaining a captured image are mounted.

The event sensor portion 6 is a sensor portion known as an EVS (Event-based Vision Sensor), a DVS (Dynamic Vision Sensor), or the like, which has event detection pixels (event detection pixels Pe to be described later) for detecting a change of a light-receiving amount as an event arrayed two-dimensionally, and generates an event signal indicating a detection result of the event.

Furthermore, regarding the image pickup sensor portion 7, "image pickup" used in the present specification broadly means obtaining image data by capturing a subject using light-receiving elements. The light-receiving elements used herein are not limited to those that receive visible light, and may also include those that receive invisible light. Furthermore, the image data used herein is a generic term for data constituted of a plurality of pieces of pixel data. The pixel data is not limited to data indicating the light-receiving amount from the subject using gradation values of a predetermined number of gradations, and may also include, for example, various types of data related to the subject, such as data indicating a distance to the subject, data indicating polarization information, and data indicating a temperature.

In other words, the "image data" obtained by "image pickup" includes data as a gradation image indicating a gradation value of the light-receiving amount for each pixel, data as a distance image indicating information on a distance to the subject for each pixel, data as a polarization image indicating polarization information for each pixel, data as a thermal image indicating information on a temperature for each pixel, and/or the like.

Hereinafter, as an example, the image pickup sensor portion 7 is assumed to be configured as a gradation sensor that obtains a gradation image, similar to a general image sensor. Examples of the gradation sensor include a CCD (Charge Coupled Device) image sensor, a CMOS (Complementary Metal Oxide Semiconductor) image sensor, and the like.

To cope with the sensor unit 3 as the mixed sensor, the image pickup device 1 of the present example is provided with an event detection optical system 2e and an image pickup optical system 2i as optical systems for guiding light from the subject to the sensors. The event detection optical system 2e collects light from the subject and guides the light to a sensing surface (light-receiving surface) of the event sensor portion 6. The image pickup optical system 2i collects light from the subject and guides the light to a sensing surface (light-receiving surface) of the image pickup sensor portion 7.

It is noted that although the configuration in which light from the subject is guided to each sensor portion via separate optical systems is exemplified herein, it is also possible to adopt a configuration in which light from the subject is guided to each sensor portion via a common optical system.

The sensor unit 3 is provided with a transmission portion 8 for transmitting event data obtained by the event sensor portion 6 and captured image data obtained by the image pickup sensor portion 7 to the outside of the sensor unit 3. It is noted that although details will be described later, the event data is data indicating an event detection result, and refers to data indicating at least an event detection clock time (occurrence clock time) and an event occurrence position on the sensing surface.

The sensor unit 3 in the present example transmits the event data and the captured image data using separate transmission systems (transmission channels), and the transmission portion 8 includes an event data transmission portion 8e for transmitting event data and a captured data transmission portion 8i for transmitting captured image data.

The event data and the captured image data transmitted from the sensor unit 3 are received by a reception portion 4. As described above, to cope with the configuration in which the event data and the captured image data are transmitted by separate systems, the reception portion 4 includes an event data reception portion 4e for receiving event data and a captured data reception portion 4i for receiving captured image data.

The event data and captured image data received by the reception portion 4 are input to a data processing portion 5, where predetermined processing is performed.

Specific examples of the processing by the data processing portion 5 will be described again later, but in the present example, the data processing portion 5 includes an event data processing portion 5e that processes the event data input via the reception portion 4 and a captured data processing portion 5i that processes the captured image data input via the reception portion 4.

Here, in the image pickup device 1 of the present example, the sensor unit 3 includes a plurality of semiconductor layers Ls, and the event sensor portion 6 and the image pickup sensor portion 7 are formed in different semiconductor layers Ls.

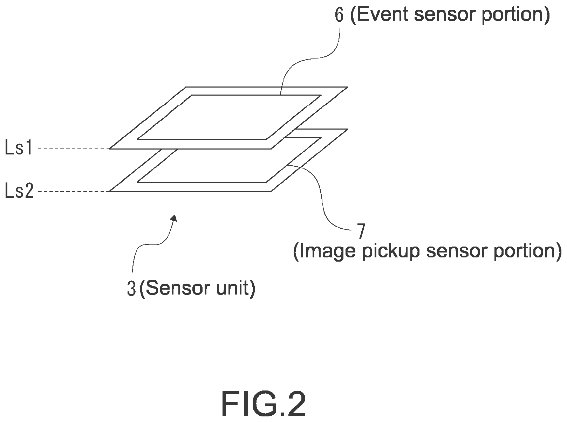

Specifically, as exemplified in the schematic diagram of Fig. 2, the sensor unit 3 in the present example includes at least two semiconductor layers Ls, that is, a first semiconductor layer Ls1 and a second semiconductor layer Ls2. The event sensor portion 6 is formed on the first semiconductor layer Ls1, and the image pickup sensor portion 7 is formed on the second semiconductor layer Ls2, so that the event sensor portion 6 and the image pickup sensor portion 7 are formed on adjacent semiconductor layers Ls.

In the sensor unit 3 as the mixed sensor, as exemplified in Fig. 2, the event sensor portion 6 and the image pickup sensor portion 7 tend to be arranged close to each other, such as a case where the event sensor portion 6 and the image pickup sensor portion 7 are formed on adjacent semiconductor layers Ls.

Therefore, a signal readout operation of one of the sensor portions may act as a noise source for the other one of the sensor portions. Specifically, there is a fear that a light-receiving signal readout operation of the image pickup sensor portion 7 will become a noise source for the event sensor portion 6 to thus induce an erroneous event detection, and that an event signal readout operation of the event sensor portion 6 will become a noise source for the image pickup sensor portion 7 to thus induce noise superposition with respect to captured images.

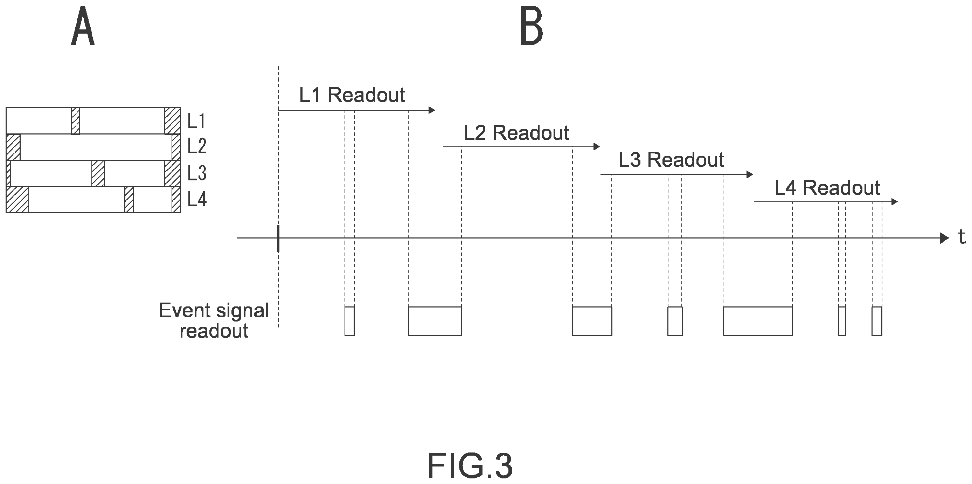

Figs. 3 are explanatory diagram showing noise superimposed on a captured image of the image pickup sensor portion 7 in accordance with the readout operation by the event sensor portion 6.

Fig. 3A schematically shows captured image data of one frame portion obtained by the image pickup sensor portion 7, and also schematically shows horizontal lines of the captured image data. Here, as an explanatory example, the captured image data includes four horizontal lines L1 to L4.

Fig. 3B schematically shows the light-receiving signal readout operation for each horizontal line, that is performed by the image pickup sensor portion 7.

In the mixed sensor, during readout of a light-receiving signal that is performed for each horizontal line in this manner, an event signal accompanying event detection by the event sensor portion 6 may be read out. During a period when the event signal readout is performed, there is a fear that noise due to the event signal readout will be superimposed on the pixels from which the light-receiving signals have been read out during that period.

For example, when the event signal readout is performed as in the example shown in the figure during the light-receiving signal readout for one frame by the image pickup sensor portion 7, there is a fear that noise will be superimposed on the captured image data in areas indicated by diagonal lines in Fig. 3A.

Meanwhile, when the light-receiving signal readout is performed in the image pickup sensor portion 7, there is a fear that the light-receiving signal readout operation will become a noise source for the event sensor portion 6, to thus induce erroneous event detection. In other words, it can be estimated that an event detected during the period when the light-receiving signal readout is performed in the image pickup sensor portion 7 is highly likely an event that has been erroneously detected due to noise.

In this regard, the present embodiment adopts a technique for generating and outputting, so as to enable event data and captured image data including noise components due to the mutual readout operations as described above to be subjected to appropriate countermeasure processing at a subsequent stage of the sensor unit 3, influence presence/absence data indicating presence/absence of an influence of noise for each of the event data and the captured image data.

### [1-2. Internal configuration example of sensor unit]

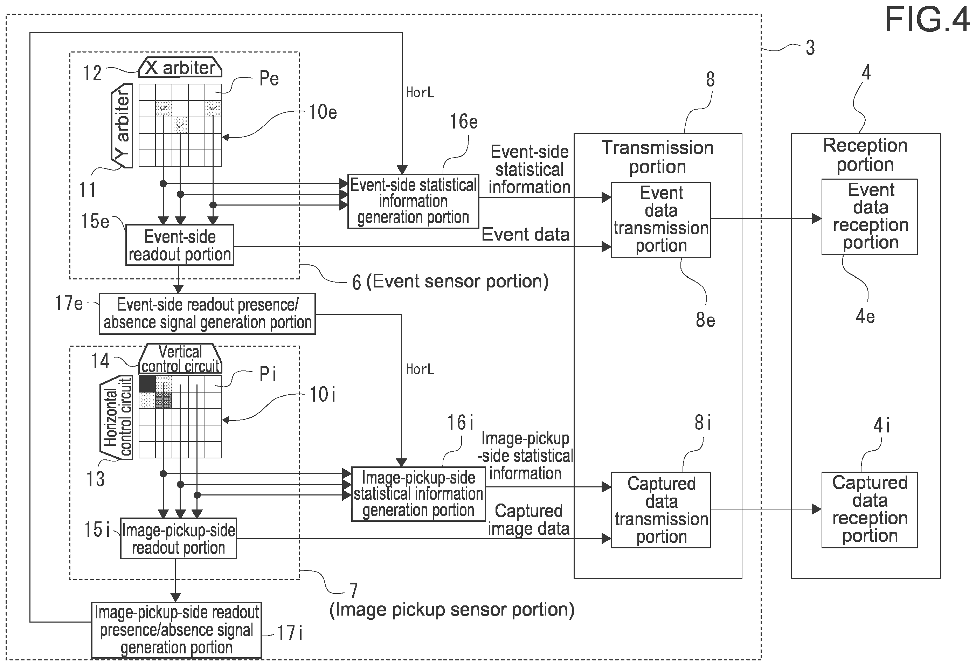

Fig. 4 is a block diagram for explaining a configuration example of the sensor unit 3 as an embodiment for generating and outputting the influence presence/absence data as described above.

It is noted that Fig. 4 also shows the reception portion 4 together with the configuration example of the sensor unit 3.

As shown in the figure, the sensor unit 3 includes, together with the event sensor portion 6 and the image pickup sensor portion 7 shown in Fig. 1, an event-side statistical information generation portion 16e, an image-pickup-side statistical information generation portion 16i, an event-side readout presence/absence signal generation portion 17e, and an image-pickup-side readout presence/absence signal generation portion 17i.

The event sensor portion 6 includes a pixel array portion 10e in which event detection pixels Pe that detect a change in the light-receiving amount as an event are arrayed two-dimensionally, a Y arbiter 11, an X arbiter 12, and an event-side readout portion 15e.

In the pixel array portion 10e, each of the event detection pixels Pe is configured to include, for example, a photoelectric conversion element such as a photodiode that performs photoelectric conversion on incident light to generate an electric charge, and an event detection circuit that detects an event based on a difference between a level of a charge signal obtained by the photoelectric conversion element and a reference level.

In the present example, the event detection circuit is capable of detecting a plus event in which the light-receiving amount increases by a certain amount or more and a minus event in which the light-receiving amount decreases by a certain amount or more while distinguishing one from the other.

When detecting an event regardless of whether the event is a plus event or a minus event, each of the event detection pixels Pe outputs a request signal for requesting the event signal readout (output) from itself to the Y arbiter 11 and the X arbiter 12. Then, each of the event detection pixels Pe outputs the event signal in accordance with arbitration by the Y arbiter 11 and the X arbiter 12, that corresponds to the request signal. Specifically, in response to reception of a response signal output by the Y arbiter 11 in response to the request signal and a response signal output by the X arbiter 12 in response to the request signal, each of the event detection pixels Pe outputs a plus event signal which is a signal indicating a detection result of a plus event and a minus event signal which is a signal indicating a detection result of a minus event to the event-side readout portion 15e. This corresponds to the event signal readout operation.

It is noted that it is not essential to provide both the Y arbiter 11 and the X arbiter 12, and it is also possible to provide only one of them.

The event-side readout portion 15e generates event data for each of the event detection pixels Pe based on the event signals (in the present example, the plus event signals and the minus event signals) input (read out) from the event detection pixels Pe.

Generated as this event data is data including at least position information of the event detection pixel Pe that has detected the event (address information in a two-dimensional plane coordinate system as the sensing surface: hereafter, will be referred to as "position information of an event occurrence pixel") and "detection clock time information" indicating an event detection clock time. In the present example, the plus event and the minus event can each be detected as the event, so to cope with this, data including "event type information" which is information indicating a type of the detected event (plus event/minus event) together with the position information of the event occurrence pixel and the detection clock time information described above, is generated as the event data.

It is noted that for convenience of illustration, the figure shows, as signal lines for reading out event signals from the pixel array portion 10e to the event-side readout portion 15e, only the signal lines from the event detection pixels Pe where events have been detected, but the signal line is wired to the event-side readout portion 15e for each of the event detection pixels Pe.

The image pickup sensor portion 7 includes a pixel array portion 10i in which image pickup pixels Pi that each include a photoelectric conversion element such as a photodiode and generate a light-receiving signal indicating a light-receiving amount are arrayed two-dimensionally, a horizontal control circuit 13, and a vertical control circuit 14.

The horizontal control circuit 13 and the vertical control circuit 14 are control circuits that perform control to achieve exposure and/or readout for each horizontal line (each pixel row) of the pixel array portion 10i. Specifically, the horizontal control circuit 13 performs control to select a target pixel row for the exposure and/or readout, and the vertical control circuit 14 performs control to select a target pixel column for the exposure and/or readout.

A light-receiving signal from each of the image pickup pixels Pi in a selected pixel row is input to an image-pickup-side readout portion 15i as a readout signal. The image-pickup-side readout portion 15i performs at least A/D (Analog to Digital) conversion on the readout signal to obtain a captured image signal, that is, captured image data, by a digital signal for each pixel row.

It is noted that for convenience of illustration, only some of the signal lines for outputting readout signals from the pixel array portion 10i to the image-pickup-side readout portion 15i are illustrated also on the image pickup sensor portion 7 side, but the signal line is wired for each pixel column of the pixel array portion 10i.

The event-side readout presence/absence signal generation portion 17e generates an event-side readout presence/absence signal which is a signal indicating whether or not an event signal is being read out in the event-side readout portion 15e. Specifically, the event-side readout presence/absence signal generation portion 17e generates, as the event-side readout presence/absence signal, a signal indicating whether or not an event signal is being read out, the signal indicating an H level when the event signal is being read out by the event-side readout portion 15e and indicating an L level when the event signal is not being read out, and/or the like.

The image-pickup-side readout presence/absence signal generation portion 17i generates an image-pickup-side readout presence/absence signal which is a signal indicating whether or not a light-receiving signal is being read out by the image-pickup-side readout portion 15i. Specifically, the image-pickup-side readout presence/absence signal generation portion 17i generates, as the image-pickup-side readout presence/absence signal, a signal indicating whether or not the light-receiving signal is being read out, the signal indicating an H level when the light-receiving signal is being read out by the image-pickup-side readout portion 15i and indicating an L level when the light-receiving signal is not being read out, and/or the like.

The event-side statistical information generation portion 16e generates event-side statistical information which is information indicating statistics related to presence/absence of an influence of noise, for the event data obtained by the event-side readout portion 15e. This event-side statistical information is an example of event-related influence presence/absence data indicating presence/absence of an influence of noise on the event signal.

Here, generating the event-related influence presence/absence data as data indicating the presence/absence of an influence of noise for each detected event is conceivable, but in the present example, information indicating a degree of the influence of noise is generated for each area Ar formed by dividing the sensing surface of the event sensor portion 6, as the event-side statistical information as the event-related influence presence/absence data.

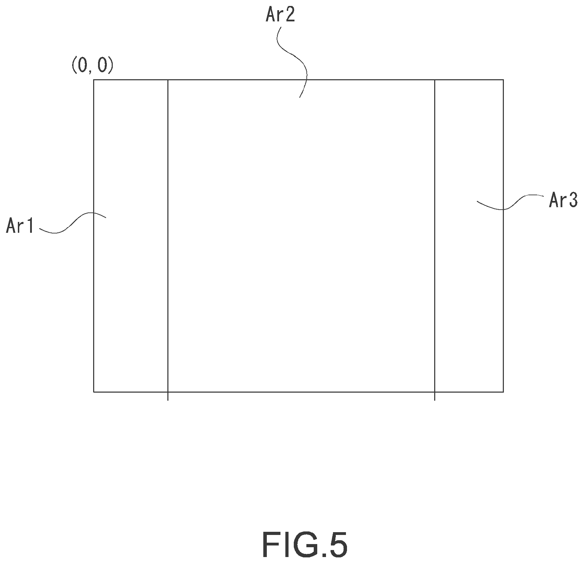

Fig. 5 shows a division example of the areas Ar.

For example, as shown in the figure, an example in which the sensing surface of the event sensor portion 6 is divided in a lateral direction (horizontal line direction: row direction) into three areas Ar, that is, a first area Ar1, a second area Ar2, and a third area Ar3, is conceivable.

The figure shows the example in which the first area Ar1 and the third area Ar3 positioned at both end portions in the lateral direction have the same width, and the second area Ar2 has a larger width than the first area Ar1 and the third area Ar3.

In Fig. 4, the event-side statistical information generation portion 16e generates, as the event-side statistical information, information indicating the number of event occurrence pixels estimated to be influenced by noise for each of the first area Ar1, the second area Ar2, and the third area Ar3.

Here, in the present example, the event occurrence pixels estimated to be influenced by noise are specified as the event detection pixels Pe for which the light-receiving signal readout in the image pickup sensor portion 7 has been performed at the time of the event detection.

In order to generate the event-side statistical information as described above, the event-side statistical information generation portion 16e determines, for each of the event occurrence pixels, whether or not the light-receiving signal readout in the image pickup sensor portion 7 has been performed at the time of the readout of the event signal. This determination uses the image-pickup-side readout presence/absence signal generated by the image-pickup-side readout presence/absence signal generation portion 17i described above.

As shown in the figure, the signal lines for reading out event signals from the event detection pixels Pe in the pixel array portion 10e are branched and wired to the event-side statistical information generation portion 16e of the present example, and the event-side statistical information generation portion 16e determines, for the event detection pixel Pe from which the event signal has been read out, whether or not the image-pickup-side readout presence/absence signal has been at an H level at the time of the readout of the event signal, to thus determine whether or not the event detection pixel Pe is an event detection pixel Pe that is estimated to be influenced by noise. Furthermore, for the event detection pixel Pe that has been determined (estimated) to be influenced by noise based on this determination, the event-side statistical information generation portion 16e specifies address information (coordinate information) thereof. In this case, the address information can be specified based on which signal line the readout signal is read out from.

Here, the event detection pixel Pe estimated to be influenced by noise as described above can be said to be a pixel that may have erroneously detected an event due to the influence of noise. In this sense, hereinafter, an event detected by the event detection pixel Pe will be referred to as a "noise event".

Based on a result of performing the noise event detection and specifying of the address information of the event detection pixel Pe in which the noise event has occurred on the basis of the image-pickup-side readout presence/absence signal as described above, the event-side statistical information generation portion 16e generates, as the event-side statistical information, information indicating the number of noise events for each of the first area Ar1, the second area Ar2, and the third area Ar3.

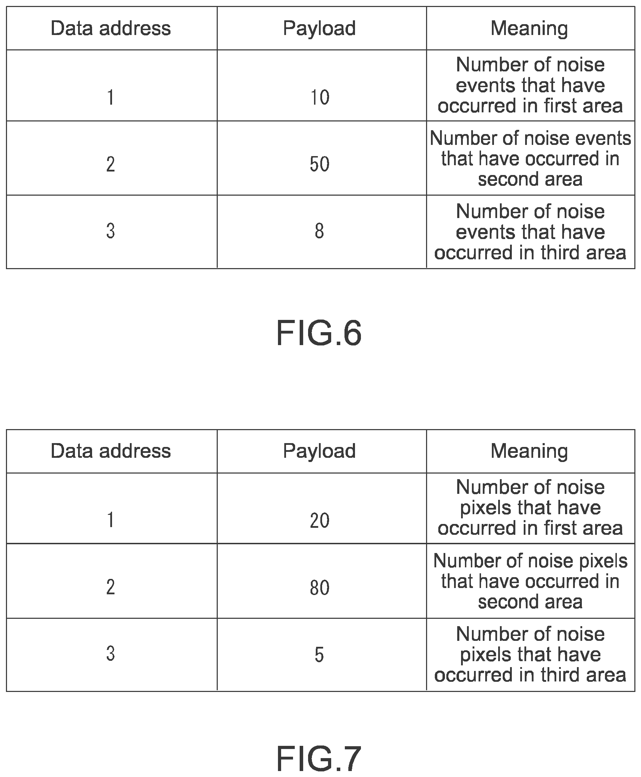

Fig. 6 is a diagram showing an example of the event-side statistical information.

As shown in the figure, the event-side statistical information in the present example can be generated as, for example, information in which the number of noise events that have occurred in the first area Ar1 is stored in a data area with a data address of "1", the number of noise events that have occurred in the second area Ar2 is stored in a data area with a data address of "2", and the number of noise events that have occurred in the third area Ar3 is stored in a data area with a data address of "3".

Next, the image-pickup-side statistical information generation portion 16i will be described.

The image-pickup-side statistical information generation portion 16i generates the image-pickup-side statistical information, which is information indicating statistics related to the presence/absence of an influence of noise, for the captured image data obtained by the image-pickup-side readout portion 15i. The image-pickup-side statistical information is an example of image-pickup-related influence presence/absence data indicating the presence/absence of an influence of noise on the light-receiving signal of the image pickup sensor portion 7.

Although it is possible to generate the image-pickup-related influence presence/absence data as data indicating the presence/absence of an influence of noise for each of the image pickup pixels Pi, in the present example, information indicating a degree of the influence of noise for each area Ar is generated as the image-pickup-side statistical information as the image-pickup-related influence presence/absence data, similar to the event-side statistical information described above.

Although not shown in the figure, the areas Ar in this case are formed by dividing the sensing surface of the image pickup sensor portion 7, and in the present example, for example, the sensing surface of the image pickup sensor portion 7 is divided into three areas, that is, the first area Ar1, the second area Ar2, and the third area Ar3, in the row direction, similar to the example shown in Fig. 5.

The image-pickup-side statistical information generation portion 16i in the present example generates, as the image-pickup-side statistical information, information indicating the number of image pickup pixels Pi that are estimated to be influenced by noise for each of the first area Ar1, the second area Ar2, and the third area Ar3.

In generating such image-pickup-side statistical information, the image-pickup-side statistical information generation portion 16i determines, for each of the image pickup pixels Pi, whether or not the event signal readout in the event sensor portion 6 has been performed during the light-receiving signal readout from the pixel array portion 10i. This determination uses the event-side readout presence/absence signal generated by the event-side readout presence/absence signal generation portion 17e.

As shown in the figure, the signal lines for reading out light-receiving signals from the pixel columns in the pixel array portion 10i are branched and wired to the image-pickup-side statistical information generation portion 16i in the present example. At the time of readout of the light-receiving signals for each horizontal line, the image-pickup-side statistical information generation portion 16i determines, for the image pickup pixel Pi from which the light-receiving signal has been read out, whether or not the event-side readout presence/absence signal has been at an H level at the time of the readout of the light-receiving signal. This makes it possible to determine (estimate) the presence/absence of an influence of noise due to the readout of the event signal for each of the image pickup pixels Pi.

Hereinafter, the image pickup pixel Pi that is estimated to be influenced by noise as described above will be referred to as a "noise pixel".

The image-pickup-side statistical information generation portion 16i generates, as the event-side statistical information, information indicating the number of noise pixels for each of the first area Ar1, the second area Ar2, and the third area Ar3 based on a result of performing the noise pixel detection on the basis of the image-pickup-side readout presence/absence signal as described above.

Fig. 7 is a diagram showing an example of the image-pickup-side statistical information.

As shown in the figure, the image-pickup-side statistical information in the present example can be generated as, for example, information in which the number of noise pixels that have occurred in the first area Ar1 is stored in the data area with the data address of "1", the number of noise pixels that have occurred in the second area Ar2 is stored in the data area with the data address of "2", and the number of noise pixels that have occurred in the third area Ar3 is stored in the data area with the data address of "3".

In Fig. 4, the transmission portion 8 transmits, to the reception portion 4, the event data obtained by the event-side readout portion 15e and the captured image data obtained by the image-pickup-side readout portion 15i, and also transmits the event-side statistical information generated by the event-side statistical information generation portion 16e and the image-pickup-side statistical information generated by the image-pickup-side statistical information generation portion 16i.

As described above in Fig. 1, in the present example, it is assumed that the event data and the captured image data are transmitted through separate systems, so the transmission portion 8 includes the event data transmission portion 8e and the captured data transmission portion 8i.

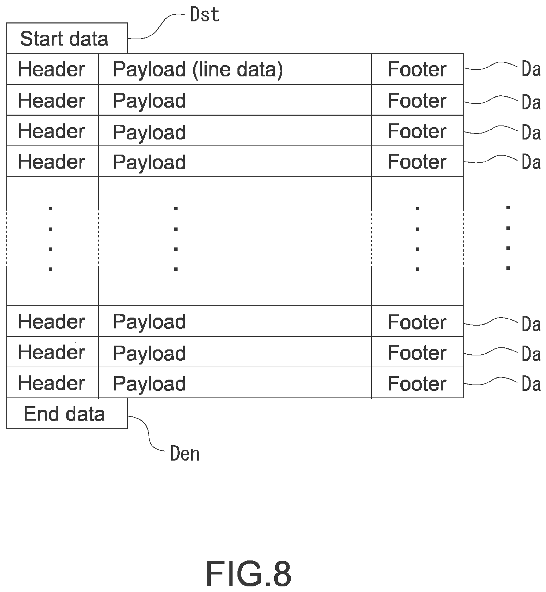

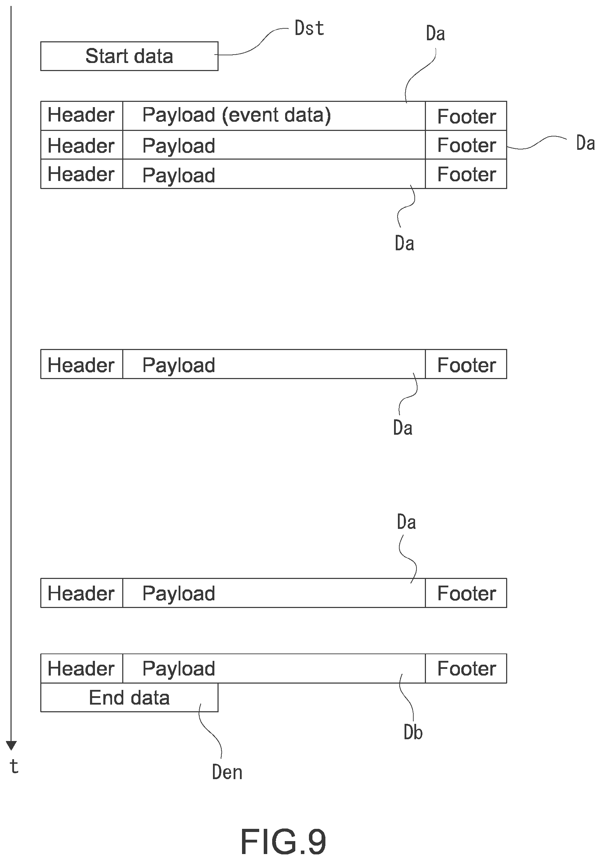

Here, data structure examples of transmission data for the captured image data and the event data will be described with reference to Figs. 8 and 9.

In the present example, it is assumed that a MIPI (Mobile Industry Processor Interface) format is used as a transmission data format for the captured image data and the event data in the transmission portion 8.

Fig. 8 shows a structure example of the transmission data for the captured image data.

The transmission data format in the present example defines a transmission frame constituted of start data Dst, a plurality of pieces of minimum unit data Da, and end data Den as shown in the figure. The minimum unit data used herein refers to the smallest unit of data that can be transmitted. The minimum unit data includes a header area for storing header information, a payload area as an actual data storage area following the header area, and a footer area for storing footer information following the payload area.

For example, regarding the captured image data, image data for one frame is transmitted in one transmission frame. In this case, each minimum unit data Da corresponds to one horizontal line in the captured image, and the payload area of each minimum unit data Da stores image data (line data) of the corresponding horizontal line in the captured image data.

Fig. 9 shows a structure example of the transmission data for the event data. Specifically, a structure example of the transmission data in the transmission frame unit described above is shown.

In the event sensor portion 6, an event occurs in accordance with a movement of a subject, and an occurrence timing and/or occurrence position thereof are indefinite. In other words, unlike the captured image data in which data of all pixels is output for each frame period, the event data is not of the nature that data for all pixels can be obtained within a certain unit of time.

For this reason, as the event data transmission technique, a technique in which a certain unit period is defined as one transmission frame period, and the event data obtained within that period is sequentially transmitted in units of the minimum unit data Da for each transmission frame period is adopted.

Specifically, a time point t1 in the figure indicates a start timing of one transmission frame period. At this time point t1, the event data transmission portion 8e outputs start data Dst. After that, each time the pieces of event data in the number that can be stored in the minimum unit data Da are obtained, the minimum unit data Da in which those pieces of event data are stored in the payload area is generated and output to the reception portion 4.

A time point t2 in the figure indicates an end timing of one transmission frame period. The event data transmission portion 8e outputs end data Den at the end timing of one transmission frame period. This completes the output of data for one transmission frame.

It is noted that one transmission frame period may be defined as, for example, a period of several msec or several tens of msec, and/or the like.

The event data transmission portion 8e and the captured data transmission portion 8i in the present example store the event-side statistical information and the image-pickup-side statistical information in the transmission frame and transmit the information under the assumption that data transmission in the transmission frame unit as described above is performed.

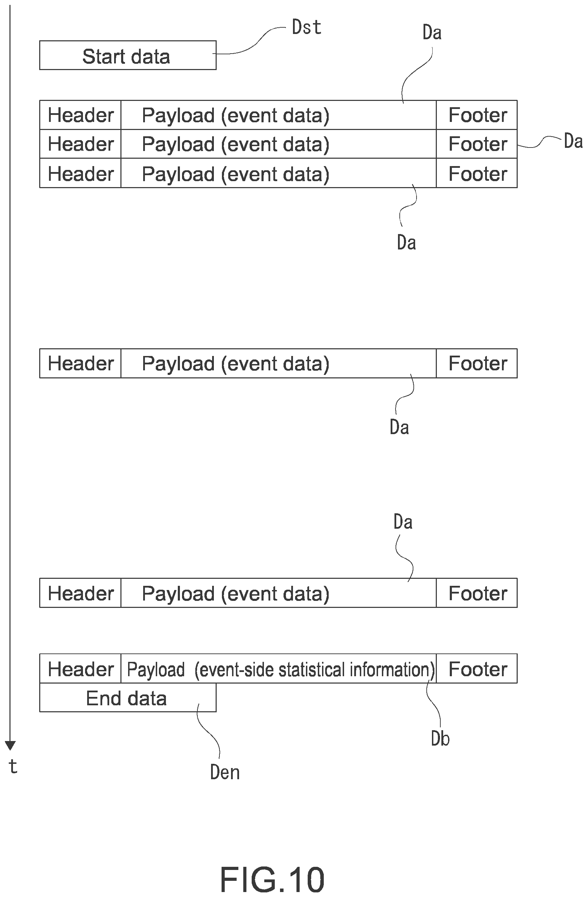

Specifically, as exemplified in Fig. 10, the event data transmission portion 8e stores the minimum unit data Db in which the event-side statistical information is stored in the payload area, as the last minimum unit data of the transmission frame. In other words, the minimum unit data Db is output immediately before the end data Den.

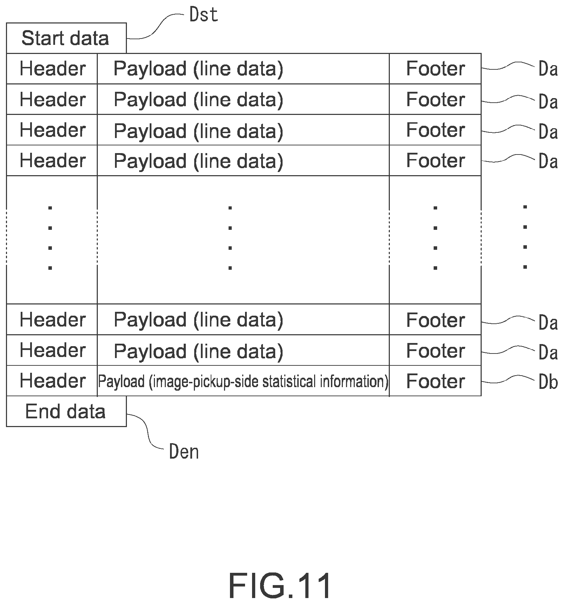

Furthermore, as exemplified in Fig. 11, the captured data transmission portion 8i stores and transmits the image-pickup-side statistical information as the last minimum unit data of the transmission frame.

In Fig. 4, the event data reception portion 4e in the reception portion 4 receives the event data and event-side statistical information transmitted by the event data transmission portion 8e as described above, and outputs the event data and event-side statistical information to the event data processing portion 5e in the data processing portion 5 shown in Fig. 1.

Furthermore, the captured data reception portion 4i in the reception portion 4 receives the captured image data and image-pickup-side statistical information transmitted by the captured data transmission portion 8i as described above, and outputs the captured image data and image-pickup-side statistical information to the captured data processing portion 5i in the data processing portion 5 shown in Fig. 1.

The processing performed for the event data by the event data processing portion 5e based on the event-side statistical information and the processing performed for the captured image data by the captured data processing portion 5i based on the image-pickup-side statistical information will be described again in detail later.

It is noted that although the descriptions above have taken the example in which the number of divisions for the areas Ar is three on both the event side and the image pickup side, the number of divisions for the areas Ar is not limited to this.

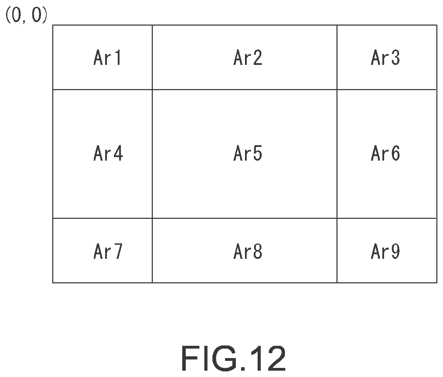

For example, the division into nine areas as exemplified in Fig. 12 is also possible.

Fig. 12 shows an example in which, for the first area Ar1, the second area Ar2, and the third area Ar3 exemplified in Fig. 5 above, the first area Ar1 is divided vertically into three areas to newly set the first area Ar1, a fourth area Ar4, and a seventh area Ar7, the second area Ar2 is divided vertically into three areas to newly set the second area Ar2, a fifth area Ar5, and an eighth area Ar8, and the third area Ar3 is divided vertically into three areas to newly set the third area Ar3, a sixth area Ar6, and a ninth area Ar9.

It is noted that regarding the division of the areas Ar, how to divide the target sensing surface is arbitrary, and determining it in accordance with a processing mode of the subsequent data processing portion 5 and/or the like, for example, is possible.

Alternatively, a configuration that enables a user to select how to divide the target sensing surface or a configuration that enables the user to select whether or not to divide the sensing surface into a plurality of areas Ar in the first place is also possible.

### [1-3. Processing procedures]

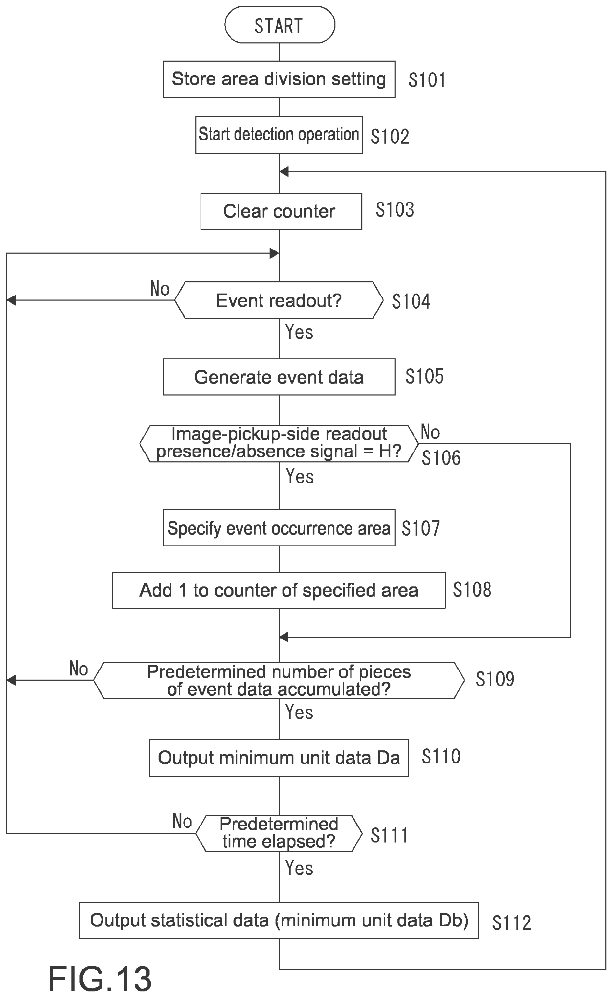

For clarity, a flow of the processing executed by the sensor unit 3 to transmit the event data and the event-side statistical information to a subsequent stage side will be described with reference to the flowchart shown in Fig. 13.

First, in Step S101, in accordance with the division of the sensing surface (pixel array portion 10e) of the event sensor portion 6 into a predetermined number of areas Ar, the event-side statistical information generation portion 16e stores area division setting information.

Next, in Step S102, the event sensor portion 6 starts an event detection operation. For example, the event sensor portion 6 starts the event detection operation based on a user operation and/or the like.

In Step S103 following Step S102, the event-side statistical information generation portion 16e clears a counter for counting the number of noise events.

In Step S104 following Step S103, the event-side statistical information generation portion 16e waits for event readout, that is, waits until a readout signal for an event signal is obtained on one of the signal lines wired from the pixel array portion 10e to the event detection pixels Pe.

When an event is read out in Step S104, the event-side readout portion 15e performs event data generation processing in Step S105, that is, performs processing of generating event data that is based on the readout event signal (in the present example, data including the position information of an event occurrence pixel, detection clock time information, and event type information described above).

Next, in Step S106, the event-side statistical information generation portion 16e determines whether or not the image-pickup-side readout presence/absence signal is at an H level. This corresponds to determining whether or not the event whose readout has been confirmed in previous Step S104 is a noise event.

When determining in Step S106 that the image-pickup-side readout presence/absence signal is at an H level (i.e., the event that has occurred is a noise event), the event-side statistical information generation portion 16e proceeds to Step S107 to perform event occurrence area specifying processing, that is, perform processing of specifying the area Ar where the event has occurred out of the first area Ar1, the second area Ar2, and the third area Ar3.

In Step S108 following Step S107, the event-side statistical information generation portion 16e performs processing of adding 1 to the counter for the specified area Ar.

In Step S109, the event data transmission portion 8e determines whether or not a predetermined number of pieces of event data have been accumulated following Step S108 when the event that has occurred is a noise event, or following Step S105 when the event that has occurred is not a noise event (No in Step S105). Here, the predetermined number is an upper limit number of pieces of event data that can be stored in the minimum unit data Da.

When the predetermined number of pieces of event data have not been accumulated, the processing returns to previous Step S104. That is, in this case, the event-side statistical information generation portion 16e waits until the next event readout.

On the other hand, when determining that the predetermined number of pieces of event data have been accumulated, the event data transmission portion 8e outputs the minimum unit data Da in Step S110. That is, the minimum unit data Da in which the predetermined number of pieces of event data are stored in the payload area is output to the reception portion 4 (event data reception portion 4e).

Next, in Step S111, the event data transmission portion 8e determines whether or not a predetermined time has elapsed, that is, whether or not one transmission frame period has ended.

When one transmission frame period has not ended, the processing returns to Step S104. That is, the event-side statistical information generation portion 16e waits until the next event readout.

On the other hand, when determining that one transmission frame period has ended, the event data transmission portion 8e performs processing of outputting statistical data in Step S112, that is, outputs the minimum unit data Db in which the event-side statistical information generated based on the count processing in Step S108 is stored in the payload area to the reception portion 4 (event data reception portion 4e).

When the processing of Step S112 is executed, the processing returns to Step S103. Thus, the generation and transmission of the event data and event-side statistical information in predetermined frame units are repeated.

It is noted that although not shown in Fig. 11, when one transmission frame period ends in a state where the number of pieces of accumulated event data is less than the predetermined number, minimum unit data Da in which only the pieces of event data in the number less than the predetermined number are stored in the payload area may be output. Also at that time, a remaining area of the payload area may be padded with 0 or 1 to reshape the data to the same size as the other minimum unit data before transmission, or minimum unit data Da with a small amount of data in the payload area may be transmitted without performing padding.

### [1-4. Countermeasure processing of subsequent stage]

The countermeasure processing performed by the data processing portion 5 will be described.

The data processing portion 5 may be configured as a processing portion that performs inference processing (hereinafter, will be referred to as "AI processing") on input data using an AI (Artificial Intelligence) model.

Specifically, the event data processing portion 5e may be configured to perform inference processing that uses an AI model, such as object detection processing, using the event data from the event data reception portion 4e as input data.

Furthermore, the captured data processing portion 5i may be configured to perform inference processing that uses an AI model, such as object recognition processing, using captured image data from the captured data reception portion 4i as input data.

At this time, the captured data processing portion 5i may use information on an object detection area that is obtained as a result of the inference processing performed by the event data processing portion 5e to perform the object recognition processing using only an image of the object detection area.

Here, in the AI processing, it is general to calculate information on a likelihood indicating reliability of an inference result as information on the inference result. For example, in the object recognition processing that uses an AI model, a label of a subject and a likelihood thereof are calculated in the inference processing. The label used herein refers to information indicating a category of the subject according to a predetermined categorization, and is, for example, information indicating a category in a case where the categorization of a subject is performed using "person", "car", "bicycle", "motorcycle", "traffic light", "dog", "cat", and/or the like.

When the data processing portion 5 performs the AI processing on the input data in this manner, it is conceivable to perform the noise countermeasure processing as processing of adjusting the likelihood calculated as the inference result of the AI processing based on influence presence/absence data as the event-side statistical information and the image-pickup-side statistical information.

Specifically, for example, in the AI processing that uses the captured image data output from the captured data reception portion 4i as the input data, the captured data processing portion 5i adjusts the likelihood calculated as the inference result based on the image-pickup-side statistical information output from the captured data reception portion 4i. At this time, the likelihood adjustment is performed as processing for each area Ar of the captured image data, since the image-pickup-side statistical information indicates the number of noise pixels for each area Ar. Specifically, for example, processing of lowering the likelihood calculated for an object recognized in the area Ar where the number of noise pixels is a predetermined number or more by a predetermined value is performed.

As a result, the likelihood is lowered for the object recognized in the area Ar estimated to have a high degree of noise superposition, thus making it less likely for the recognition result to be output. In other words, the accuracy of the inference processing can be improved in the point that an erroneous inference result can be prevented from being output.

It is noted that although the descriptions above have taken the example of performing the processing of lowering the likelihood calculated for the object recognized in the area Ar where the number of noise pixels is a predetermined number or more by a predetermined value, it is also possible to lower, for each area Ar, a value of the likelihood of an object recognized in that area Ar by a subtraction value corresponding to the number of noise pixels, for example.

There are various techniques for adjusting the likelihood based on the statistical information indicating the degree of noise superposition for each area Ar, and the present technology is not limited to a specific technique.

Furthermore, although the descriptions above have taken the example in which the AI processing that targets the event data and the AI processing that targets the captured image data are performed separately, it is also possible to adopt a configuration in which single AI processing is performed using the event data and captured image data as the input data.

In that case, the likelihood adjustment may be performed as processing of adjusting the likelihood calculated as a result of the inference processing that uses the event data and captured image data as the input data as described above, based on the event-side statistical information and the image-pickup-side statistical information.

Alternatively, the AI processing may be AI processing that uses fusion data of the event data and captured image data as the input data.

When the fusion data is used as the input data, noise reduction processing and/or frame decimation processing to be described below may be performed as processing that targets the fusion data.

The data processing portion 5 may also be configured as a processing portion that performs the noise reduction processing on input data.

In that case, the noise countermeasure processing may be performed as processing of adjusting an intensity of the noise reduction processing that targets the input data based on the influence presence/absence data as the event-side statistical information and/or the image-pickup-side statistical information.

Specifically, for example, the captured data processing portion 5i in this case adjusts a noise reduction effect for each area Ar based on the image-pickup-side statistical information output by the captured data reception portion 4i for the noise reduction processing that uses the captured image data output by the captured data reception portion 4i as the input data.

At this time, the adjustment of the noise reduction effect for each area Ar may be performed so as to enhance the noise reduction effect for the area Ar with a high degree of noise superposition. For example, it is possible to define a noise reduction effect level corresponding to a magnitude of the number of noise pixels for each area Ar, and perform the noise reduction processing for each area Ar at an effect level corresponding to the number of noise pixels in that area Ar.

It is noted that the number of steps in the stepwise adjustment of the noise reduction effect level according to the magnitude of the number of noise pixels is arbitrary.

Furthermore, the adjustment of the noise reduction effect can be achieved by, for example, changing a coefficient of a filter used for the noise reduction, and/or the like.

By performing the noise reduction effect adjustment processing that is based on the influence presence/absence data as described above, it is possible to realize appropriate noise reduction processing corresponding to the degree of noise superposition in the input data. Particularly, by performing the noise reduction effect adjustment processing for each area Ar based on the statistical information representing the degree of noise superposition for each area Ar, it is possible to avoid an unnecessary increase of the noise reduction effect for the area Ar with a low degree of noise superposition, and thus deterioration of image quality can be suppressed.

Further, it is also possible to perform the noise countermeasure processing as the frame decimation processing on input data. In this case, the data processing portion 5 performs the frame decimation processing that is based on the influence presence/absence data as the event-side statistical information and the image-pickup-side statistical information, on the input data as the event data and captured image data obtained in predetermined frame units.

Specifically, for example, the captured data processing portion 5i in this case performs processing of calculating a total number of noise pixels in the entire frame for the captured image data output from the captured data reception portion 4i, based on the image-pickup-side statistical information output from the captured data reception portion 4i, and not inputting the captured image data if the calculated total number is equal to or larger than a predetermined threshold value and inputting the captured image data if the calculated total number is smaller than the predetermined threshold value.

As a result, when predetermined processing such as the AI processing described above is performed in the subsequent stage for the captured image data output from the sensor unit 3, for example, frame images with a high degree of noise superposition can be prevented from being input as processing target images for the predetermined processing, and lowering of the processing accuracy of the predetermined processing can be suppressed, to thus achieve appropriate noise countermeasure processing.

Here, a configuration in which both the frame decimation processing described above and the noise reduction effect adjustment processing described above are performed is also possible. Alternatively, a configuration in which the likelihood adjustment is further performed together with these frame decimation processing and noise reduction effect adjustment processing is also possible.

It is noted that although the descriptions above have exemplified only the countermeasure processing by the captured data processing portion 5i regarding the noise countermeasure processing in the data processing portion 5, the event data processing portion 5e can also perform countermeasure processing similar to the countermeasure processing by the captured data processing portion 5i exemplified above.

It is noted that it is not necessary for the data processing portion 5 to perform the noise countermeasure processing on both the captured image data side and the event data side, and at least one of them only needs to be performed. Needless to say, the countermeasure processing on the captured image data side is performed based on the image-pickup-side statistical information, and the countermeasure processing on the event data side is performed based on the event-side statistical information.

### [1-5. Other examples of transmission data]

Here, although the descriptions above have taken the example in which the information indicating the number of noise events and the number of noise pixels for each area Ar is generated for the event-side statistical information and the image-pickup-side statistical information, the event-side statistical information and the image-pickup-side statistical information can also be generated as information indicating presence/absence of an influence for each event (for each event detection pixel Pe) and each image pickup pixel Pi, instead of for each area Ar.

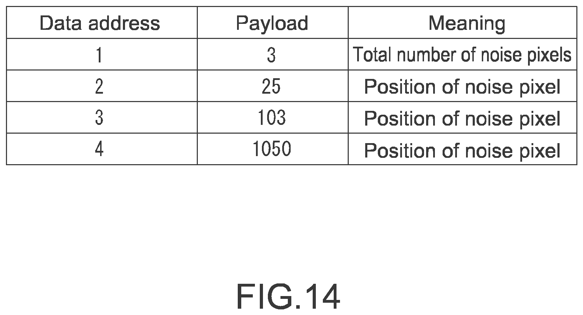

Fig. 14 is a diagram showing an example of the image-pickup-side statistical information in that case.

Basically, the image-pickup-side statistical information in this case only needs to be generated as information with which noise pixels can be specified. In the example shown in the figure, as an example of the image-pickup-side statistical information with which noise pixels can be specified in this manner, information including information indicating a total number of noise pixels (total number of noise pixels in one frame) as well as information indicating a position of each noise pixel is generated.

Specifically, the image-pickup-side statistical information in this case is generated as information in which the total number of noise pixels is stored in the data area with the data address of "1", and information indicating a position of one noise pixel per address is stored in the data areas with data addresses of "2" and onwards. In this case, as the number of detected noise pixels increases, the number of data areas with the data addresses of "2" and onwards increases.

It is noted that the event-side statistical information can also adopt a data structure similar to that shown in Fig. 14 when the event-side statistical information is information indicating the presence/absence of an influence for each event.

Furthermore, it is also possible for the image-pickup-side statistical information to be statistical information in horizontal line units instead of the statistical information in the area Ar units.

In this case, the image-pickup-side statistical information generation portion 16i generates the statistical information on the presence/absence of an influence of noise for each pixel group for one horizontal line.

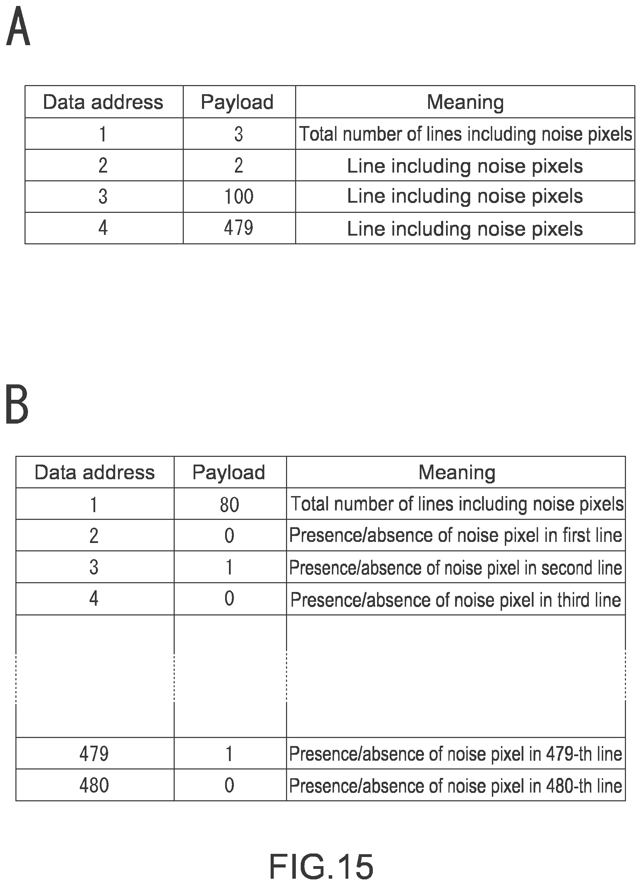

As a specific example, the image-pickup-side statistical information may be generated as information indicating the lines including the noise pixels, as shown in Figs. 15A and 15B. In the example shown in Fig. 15A, information indicating a position of the horizontal line is stored only for the horizontal lines including the noise pixels, while in the example shown in Fig. 15B, information indicating presence/absence of noise pixels (flag information) is stored for each horizontal line in the captured image data.

It is noted that in either of the examples shown in Figs. 15A and 15B, the image-pickup-side statistical information may also store information indicating a total number of horizontal lines including noise pixels, as shown in the figure.

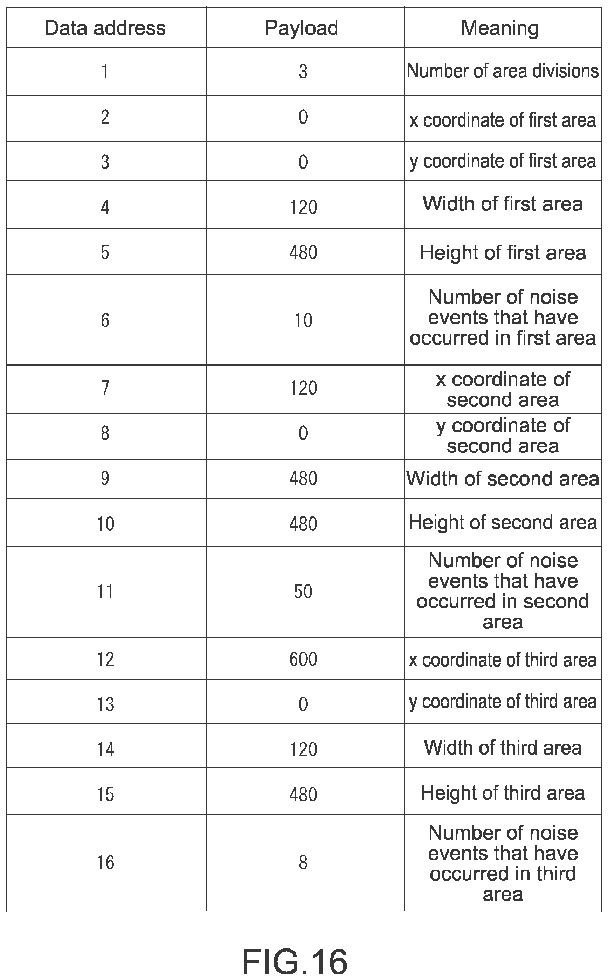

Furthermore, while the descriptions above assume that the subsequent processing portion (data processing portion 5) is aware of the division pattern for the areas Ar, it is also possible that the subsequent processing portion is not aware of the division pattern for the areas Ar. In that case, the statistical information may be generated as information including definition information of each area Ar, as shown in Fig. 16.

Specifically, Fig. 16 shows, for the event-side statistical information, a data structure example of statistical information that corresponds to the division into three areas of the first area Ar1 to the third area Ar3, as shown in Fig. 5 above. As the event-side statistical information in this case, "3" which is the number of divisions for the areas Ar is stored in the data area with the data address of "1". Furthermore, information for specifying the position and size of the first area Ar1 and the number of noise events that have occurred in the first area Ar1 are stored in the data areas with the data addresses of "2" to "6". Specifically, an x coordinate of a reference position of the first area Ar1 (e.g., an upper left pixel position of the first area Ar1) is stored in the data area with the data address of "2", and a y coordinate is stored in the data area with the data address of "3". Further, information on a width (number of pixels) of the first area Ar1 is stored in the data area with the data address of "4", and information on a height (number of pixels) of the first area Ar1 is stored in the data area with the data address of "5". Furthermore, the number of noise events that have occurred in the first area Ar1 is stored in the data area with the data address of "6".

Similarly, similar information on the second area Ar2 is stored in the data areas with the data addresses of "7" to "11", and similar information on the third area Ar3 is stored in the data areas with the data addresses of "12" to "16".

It is noted that when similar statistical information is used for the image-pickup-side statistical information, information indicating the number of noise pixels for each area Ar only needs to be stored in place of the information indicating the number of noise events for each area Ar.

Furthermore, the statistical information related to the presence/absence of an influence of noise is not limited to the information indicating spatial statistics for each area Ar and/or the like, as exemplified above, and may alternatively be, for example, information indicating temporal statistics such as between previous and next frames.

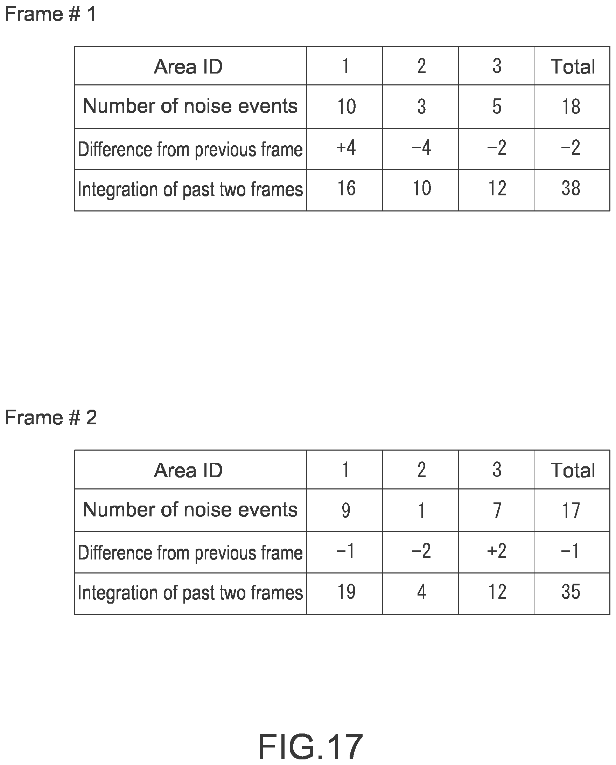

Fig. 17 shows a data structure example in a case where a difference from the previous frame or an integration value from the previous frame is included as the statistical information.

Specifically, Fig. 17 shows an example in which, in correspondence with the case of the division into three areas of the first area Ar1 to the third area Ar3, information indicating a difference from the previous frame and information indicating an integration value of the past two frames (the current frame and the immediately preceding frame) are stored with respect to the number of noise events (or the number of noise pixels) for each area Ar. The figure shows an example of the statistical information for each of two consecutive frames (frame #1, frame #2).

Furthermore, although the descriptions above have taken the example in which the statistical information is stored in the last minimum unit data of the transmission frame, the manner in which the statistical information is stored in the transmission frame is not limited to this.

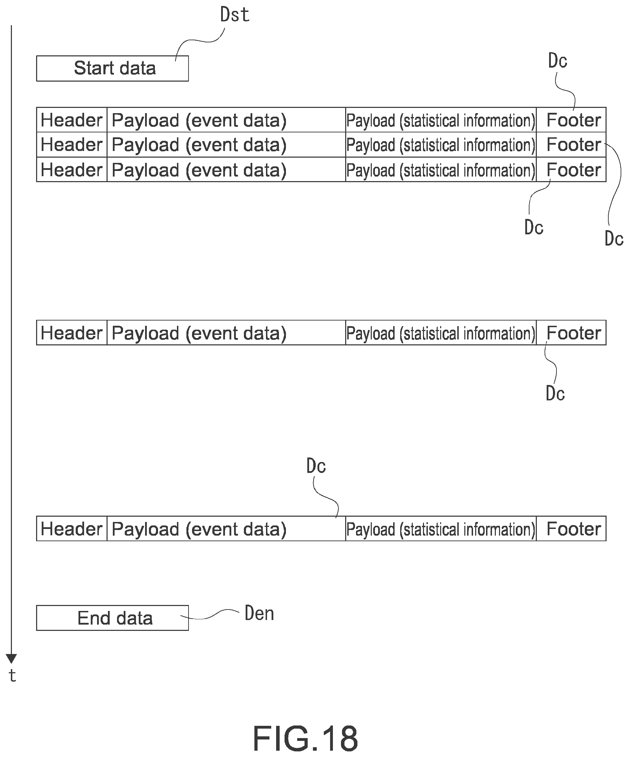

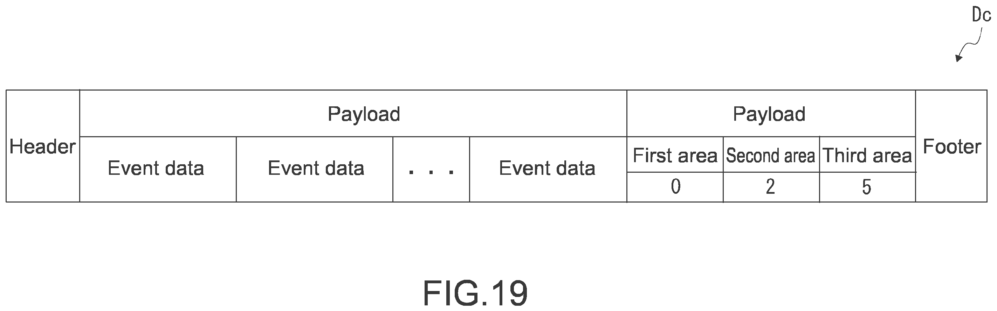

For example, as exemplified in Fig. 18, the statistical information may also be stored within each minimum unit data. Fig. 18 exemplifies a transmission frame for event data. In this case, as each minimum unit data within the transmission frame, minimum unit data Dc in which a predetermined number of pieces of event data and statistical information related to the predetermined number of pieces of event data are stored in the payload area is transmitted. The statistical information in this case may be, for example, information that stores the number of noise events for each area Ar during a period in which the predetermined number of pieces of event data have been obtained, as exemplified in Fig. 19.

It is noted that the statistical information to be stored in the minimum unit data Dc is not limited to the statistical information obtained during the period in which the predetermined number of pieces of event data have been obtained as described above, and may alternatively be statistical information related to the number of noise events that have occurred during a longer period such as one transmission frame period.

Also for the image-pickup-side statistical information, it is possible to generate information for each minimum unit data and store the information for each minimum unit data as in the example shown in Fig. 18. For example, it is possible to generate information indicating a total number of noise pixels for each horizontal line as the image-pickup-side statistical information, and store the image-pickup-side statistical information for each minimum unit data, and/or the like.

### <2. Second embodiment>

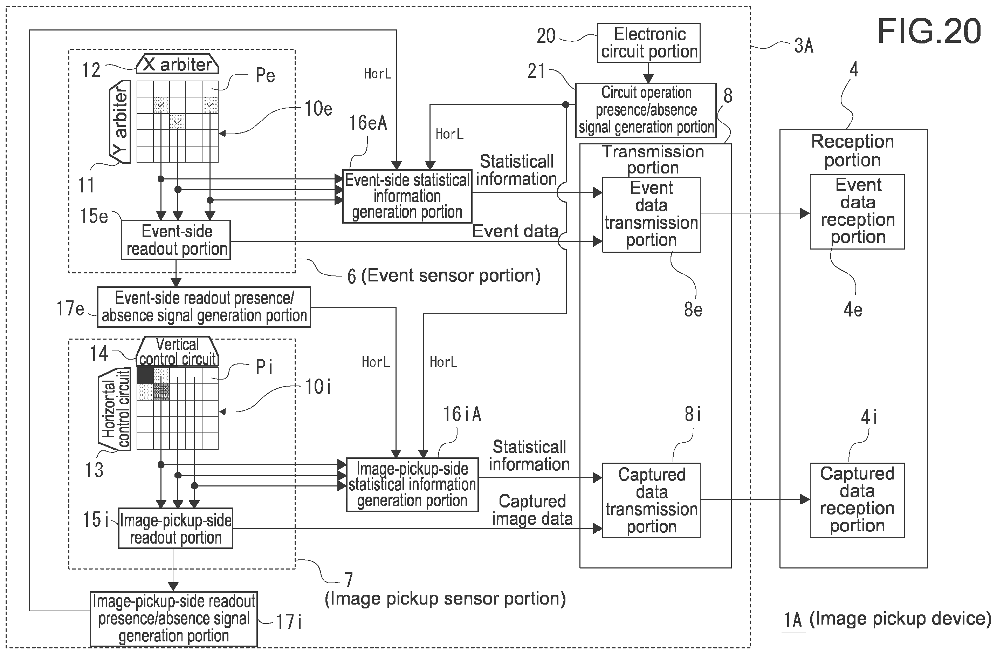

Fig. 20 is a block diagram for explaining a configuration example of an image pickup device 1A according to a second embodiment.

The image pickup device 1A according to the second embodiment has a configuration similar to that of the image pickup device 1 according to the first embodiment except that a sensor unit 3A is provided in place of the sensor unit 3. For this reason, Fig. 20 mainly shows a configuration example of the sensor unit 3A, and illustrations of the event detection optical system 2e, the image pickup optical system 2i, and the data processing portion 5 are omitted.

It is noted that in descriptions below, portions that are similar to those that have already been described are denoted by the same reference numerals, and descriptions thereof will be omitted.

The second embodiment relates to a countermeasure for a case where an electronic circuit portion 20 that becomes a third noise source other than the event sensor portion 6 and the image pickup sensor portion 7 is present.

The sensor unit 3A differs from the sensor unit 3 according to the first embodiment in that the electronic circuit portion 20 and a circuit operation presence/absence signal generation portion 21 are provided, and an event-side statistical information generation portion 16e and an image-pickup-side statistical information generation portion 16i are respectively provided in place of the event-side statistical information generation portion 16e and the image-pickup-side statistical information generation portion 16i.

The electronic circuit portion 20 is a circuit portion that is mounted on the sensor unit 3A and becomes a third noise source other than the event sensor portion 6 and the image pickup sensor portion 7.

A specific example of the electronic circuit portion 20 is a DSP (Digital Signal Processor) that performs digital image processing such as predetermined filter processing on the captured image data obtained by the image pickup sensor portion 7, for example. Another example of the electronic circuit portion 20 is a circuit portion of a semiconductor memory, specifically, a DRAM (Dynamic Random Access Memory), that is used to temporarily store the captured image data and/or event data (hereinafter, will be referred to as a "memory circuit portion").

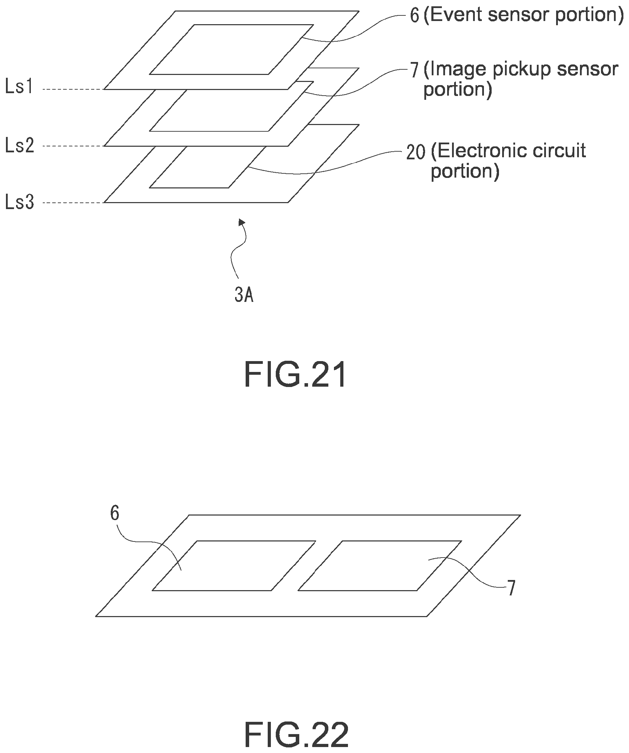

Fig. 21 is an explanatory diagram of a mounting example of the electronic circuit portion 20 in the sensor unit 3A. As shown in the figure, the electronic circuit portion 20 may be formed on a semiconductor layer Ls different from the semiconductor layer Ls on which the event sensor portion 6 is formed (the first semiconductor layer Ls1 in the figure) and the semiconductor layer Ls on which the image pickup sensor portion 7 is formed (the second semiconductor layer Ls2 in the figure). The figure shows an example in which the electronic circuit portion 20 is formed on a third semiconductor layer Ls3 below the second semiconductor layer Ls2.

When the electronic circuit portion 20 is a DSP, there is a fear that an operation of the DSP will act as a noise source for at least one of the event sensor portion 6 or the image pickup sensor portion 7.

Alternatively, when the electronic circuit portion 20 is the memory circuit portion described above, there is a fear that a readout and/or writing operation of the DRAM performed by the memory circuit portion will act as a noise source for at least one of the event sensor portion 6 or the image pickup sensor portion 7. Furthermore, in the DRAM, the memory circuit portion performs refresh processing to retain stored information in memory cells, but there is a fear that this refresh processing will also act as a noise source for at least one of the event sensor portion 6 or the image pickup sensor portion 7.

In this regard, the sensor unit 3A according to the present embodiment is provided with the circuit operation presence/absence signal generation portion 21 as shown in Fig. 20, and this circuit operation presence/absence signal generation portion 21 generates a circuit operation presence/absence signal which is a signal indicating presence/absence of an operation of the electronic circuit portion 20.

Specifically, when the electronic circuit portion 20 is a DSP, the circuit operation presence/absence signal generation portion 21 generates a signal indicating presence/absence of an operation of the DSP, for example, a signal that indicates an H level when operating and indicates an L level when not operating, as the circuit operation presence/absence signal. Alternatively, when the electronic circuit portion 20 is a memory circuit portion, a signal indicating whether or not at least one of the DRAM readout processing, writing process, or refresh processing is being performed, for example, a signal that indicates an H level when any of the above processing is being executed and indicates an L level when any of the above processing is not executed, is generated as the circuit operation presence/absence signal.

The circuit operation presence/absence signal generated by circuit operation presence/absence signal generation portion 21 is input to the event-side statistical information generation portion 16eA and the image-pickup-side statistical information generation portion 16iA.

The event-side statistical information generation portion 16eA determines whether or not at least one of the light-receiving signal readout operation in the image pickup sensor portion 7 or the processing of the electronic circuit portion 20 has been executed at a time of readout of the event signal, based on the circuit operation presence/absence signal input from the circuit operation presence/absence signal generation portion 21 and the image-pickup-side readout presence/absence signal input from the image-pickup-side readout presence/absence signal generation portion 17i, and generates the event-side statistical information based on the determination result. This makes it possible to appropriately generate the influence presence/absence data indicating the presence/absence of an influence of noise, in correspondence with a case where both the light-receiving signal readout operation in the image pickup sensor portion 7 and the processing of the electronic circuit portion 20 may act as noise sources for the event sensor portion 6.

The image-pickup-side statistical information generation portion 16iA determines whether or not at least one of the event signal readout operation in the event sensor portion 6 or the processing of the electronic circuit portion 20 has been executed at a time of readout of the light-receiving signal, based on the circuit operation presence/absence signal input from the circuit operation presence/absence signal generation portion 21 and the event-side readout presence/absence signal input from the event-side readout presence/absence signal generation portion 17e, and generates the image-pickup-side statistical information based on the determination result. This makes it possible to appropriately generate the influence presence/absence data indicating the presence/absence of an influence of noise, in correspondence with a case where both the event signal readout operation in the event sensor portion 6 and the processing of the electronic circuit portion 20 may act as noise sources for the image pickup sensor portion 7.

It is noted that although the descriptions above have taken the example in which the statistical information (noise influence presence/absence data) reflecting the presence/absence of an operation of the electronic circuit portion 20 is generated for both the event side and the image pickup side, it is only necessary to generate the statistical information reflecting the presence/absence of an operation of the electronic circuit portion 20 only on the event side when the operation of the electronic circuit portion 20 acts as a noise source only on the event sensor portion 6 side, and only on the image pickup side when the operation of the electronic circuit portion 20 acts as a noise source only on the image pickup sensor portion 7 side.

It is noted that although the descriptions above have exemplified the DSP and the memory circuit portion as examples of the electronic circuit portion 20, the second embodiment can be suitably applied to a case where an electronic circuit portion that may generate electromagnetic noise along with the processing that targets at least one of the captured image data or the event data is mounted on the sensor unit 3A.

### <3. Modified examples>

The embodiments are not limited to the specific examples described above, and various configurations as modified examples may be adopted.

For example, although the descriptions above have exemplified, as the technique for determining presence/absence of the event signal readout (presence/absence of an influence of noise) for each image pickup pixel Pi, the technique in which the image-pickup-side statistical information generation portion 16i monitors presence/absence of light-receiving signal readout on the signal line for each pixel column in the pixel array portion 10i, the technique for determining the presence/absence of the event signal readout for each image pickup pixel Pi is not limited to this.

For example, a technique that uses a clock signal that is used in light-receiving signal readout control to recognize a readout timing for each image pickup pixel Pi based on the elapsed time from the readout start timing, and perform the determination of the presence/absence of the event signal readout that is based on the event-side readout presence/absence signal at the readout timing for each image pickup pixel Pi is also possible.

Furthermore, although the descriptions above have taken the example in which the determination on the presence/absence of an influence of noise is performed for each pixel, it is also possible to determine the presence/absence of an influence of noise with respect to the light-receiving signal of the image pickup sensor portion 7 every plurality of pixels. For example, it is possible to determine the presence/absence of an influence of noise every plurality of image pickup pixels Pi, the number of which is smaller than the number of image pickup pixels Pi for one horizontal line. By making the determination every plurality of image pickup pixels Pi, the number of which is smaller than the number of image pickup pixels Pi for one horizontal line, it is possible to appropriately obtain statistical information for each area Ar in the case where the division of the areas Ar is performed in the lateral direction as shown in Fig. 5 above, for example.

Furthermore, although the descriptions above have exemplified the case where the event sensor portion 6 and the image pickup sensor portion 7 are in a stacked relationship, the event sensor portion 6 and the image pickup sensor portion 7 may be formed on the same semiconductor layer Ls as exemplified in Fig. 22.

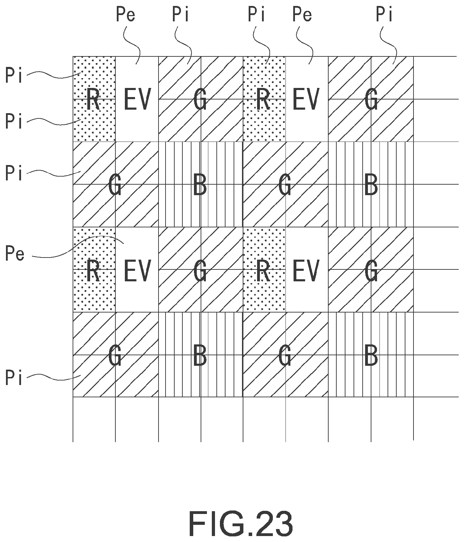

Fig. 22 shows an example in which the event sensor portion 6 and the image pickup sensor portion 7 are arranged on the same semiconductor layer Ls while being spaced apart from each other, but as a mounting form of the event sensor portion 6 and the image pickup sensor portion 7 on the same semiconductor layer Ls, for example, a mounting form according to a form in which the image pickup pixels Pi and the event detection pixels Pe are mixed in the same pixel array portion as exemplified in Fig. 23 is also possible.

In addition, the second embodiment has taken the example in which the electronic circuit portion 20 is formed on the semiconductor layer Ls different from those of the event sensor portion 6 and the image pickup sensor portion 7 (Fig. 21), but it is also possible for the electronic circuit portion 20 to be formed on the same semiconductor layer Ls as the event sensor portion 6, the same semiconductor layer Ls as the image pickup sensor portion 7, or the semiconductor layer Ls on which the event sensor portion 6 and the image pickup sensor portion 7 are formed.

Furthermore, although the descriptions above have exemplified the case where the event data and the captured image data are output to the subsequent stage via separate transmission systems, it is also possible to output the event data and the captured image data via a single transmission system.

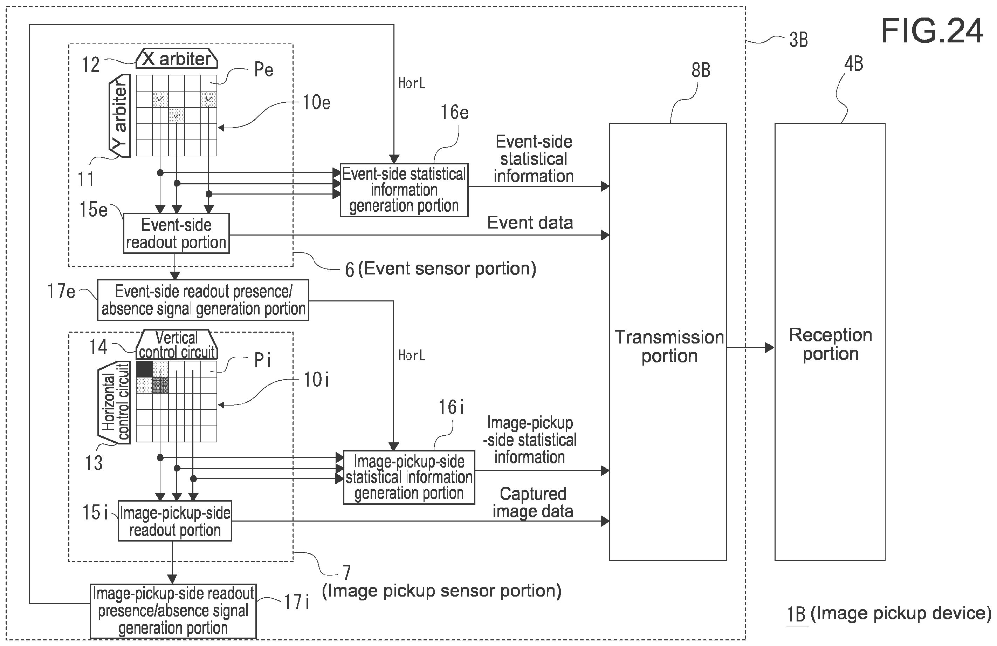

Fig. 24 is a block diagram for explaining a configuration example of an image pickup device 1B as a modified example that corresponds to the case where the event data and the captured image data are output via a single transmission system as described above.

It is noted that although not shown in the figure, similar to the image pickup device 1, the image pickup device 1B also includes the event detection optical system 2e, the image pickup optical system 2i, and the data processing portion 5.

As shown in the figure, the image pickup device 1B includes a sensor unit 3B in place of the sensor unit 3, and the sensor unit 3B differs from the sensor unit 3 in that a transmission portion 8A is provided in place of the transmission portion 8, and a reception portion 4B is provided in place of the reception portion 4.

The transmission portion 8A stores, before transmission, the event data obtained by the event-side readout portion 15e, the captured image data obtained by the image-pickup-side readout portion 15i, the event-side statistical information generated by the event-side statistical information generation portion 16e, and the image-pickup-side statistical information generated by the image-pickup-side statistical information generation portion 16i, within the same transmission frame.

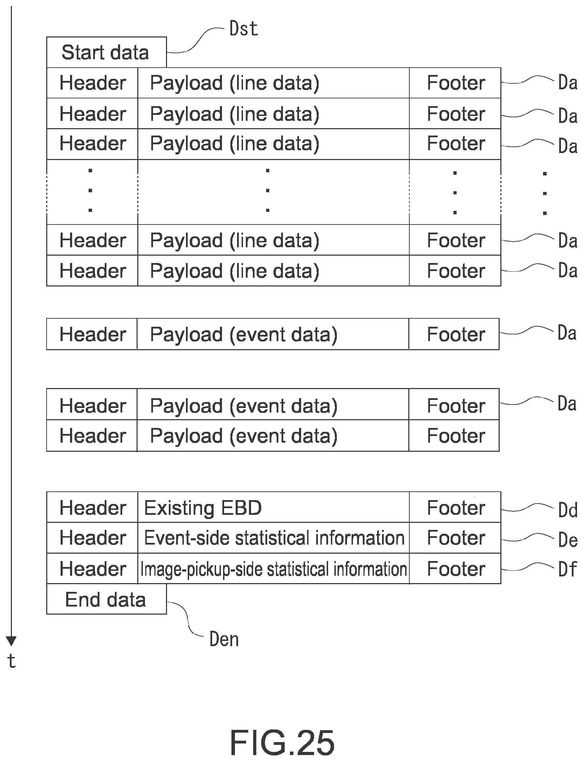

Fig. 25 shows a data structure example of the transmission frame in this case.

As shown in the figure, in this transmission frame in this case, following the minimum unit data Da including line data of the captured image data and the minimum unit data Da including a predetermined number of pieces of event data, minimum unit data Dd including existing EBD (embedded) data, minimum unit data De including the event-side statistical information, and minimum unit data Df including the image-pickup-side statistical information are stored at a last part of the frame.

In this case, size information of the subsequent event-side statistical information and image-pickup-side statistical information is stored at a predetermined data address in the existing EBD data in the minimum unit data Dd.

This enables the processing portion at a subsequent stage of the sensor unit 3B to separately acquire the event-side statistical information and the image-pickup-side statistical information.

In Fig. 24, the reception portion 4B receives the transmission frame data described above that has been transmitted by the transmission portion 8 via a single transmission system. The reception portion 4B is capable of separately acquiring the event data and the captured image data based on, for example, header information in the minimum unit data Da. The reception portion 4B is also capable of separately acquiring the event-side statistical information and the image-pickup-side statistical information based on the size information in the existing EBD data described above.

It is noted that the descriptions above have exemplified the technique in which, for enabling the event-side statistical information and the image-pickup-side statistical information to be acquired separately, size information thereof is stored in the existing EBD data. However, for enabling the event-side statistical information and the image-pickup-side statistical information to be acquired separately, for example, other techniques involving transmitting the image-pickup-side statistical information and the event-side statistical information using different Data Types, allocating different virtual CHs to the image-pickup-side statistical information and the event-side statistical information, and/or the like may also be used.

Furthermore, it is also possible to generate the influence presence/absence data for the event data as data that takes into account not only the presence/absence of readout of the light-receiving signal in the image pickup sensor portion 7 but also saturation of event detection in the event sensor portion 6.

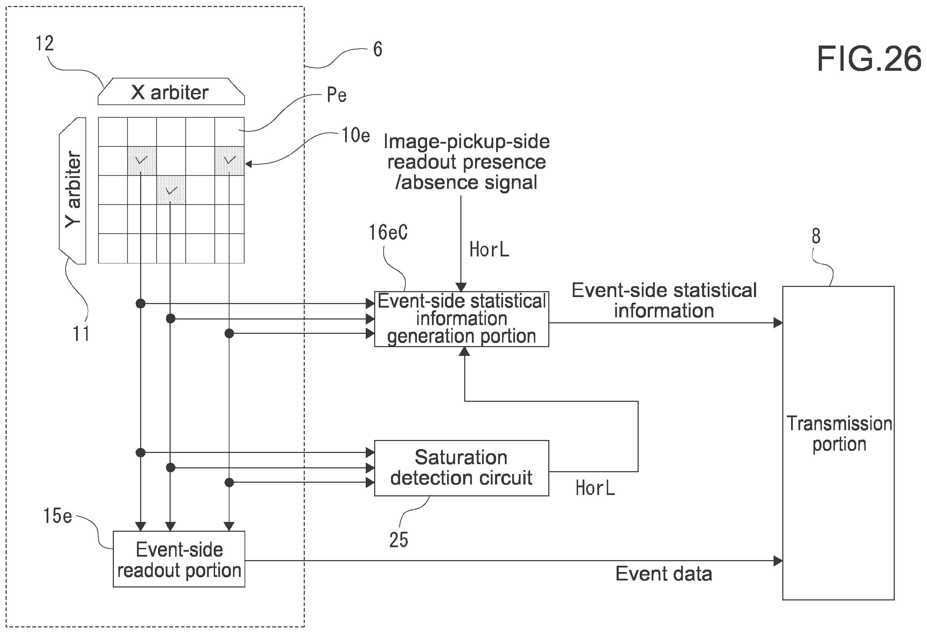

For example, as exemplified in Fig. 26, a saturation detection circuit 25 that determines whether or not the event detection in the event sensor portion 6 is in a saturated state is provided. For example, the saturation detection circuit 25 determines whether or not the number of events detected per unit time is a predetermined number or more, to determine whether or not the state is the saturated state, and outputs, as a saturation presence/absence signal indicating the determination result, a signal that indicates an H level in the saturated state and indicates an L level in the unsaturated state, for example, to an event-side statistical information generation portion 16eC.

The event-side statistical information generation portion 16eC determines whether or not at least one of the light-receiving signal readout in the image pickup sensor portion 7 or the saturation of the event sensor portion 6 has occurred every time an event signal is read out from the pixel array portion 10e, based on the image-pickup-side readout presence/absence signal and the saturation presence/absence signal, and generates the event-side statistical information based on the determination result. There is a fear that the event that has been detected in a state where the event detection in the event sensor portion 6 is saturated is an erroneously-detected event. Therefore, the event-side statistical information is generated so that such an event is treated as a noise event.

This enables appropriate processing that takes into account the presence of an event that has been erroneously detected due to the saturation of the event detection to be performed as the subsequent countermeasure processing.

Here, although the descriptions above have exemplified MIPI as an example of the transmission data format, the application of the present technology is not limited to MIPI.

Furthermore, when implementing the present technology using a specified transmission data format, the statistical information (influence presence/absence data) may be stored in a vendor extension area, a reserved area, or an unused area provided in the specified data format.

Furthermore, although the descriptions above have described the example in which the data processing portion that performs the processing that is based on the influence presence/absence data as the event-side statistical information, the image-pickup-side statistical information, and/or the like is provided in the image pickup device equipped with the sensor unit, it is also possible to adopt a configuration in which the data processing portion is provided in an external device of the image pickup device.

### <4. Summary of embodiments>

As described above, the image pickup device (1, 1A, 1B) according to the embodiment includes: a sensor unit (3, 3A, or 3B) including an event sensor portion (6) which has event detection pixels (Pe) for detecting a change of a light-receiving amount as an event arrayed two-dimensionally, and generates an event signal indicating a detection result of the event, an image pickup sensor portion (7) which has image pickup pixels (Pi) arrayed two-dimensionally and obtains a captured image, the image pickup pixels including photoelectric conversion elements and generating a light-receiving signal indicating a light-receiving amount, an event-related influence presence/absence data generation portion (event-side statistical information generation portion 16e or 16eA) which generates, on the basis of a result of determining whether or not a readout operation by the image pickup sensor portion has been executed at a time of the event detection by the event sensor portion, event-related influence presence/absence data indicating presence/absence of an influence of noise with respect to the event signal, an image-pickup-related influence presence/absence data generation portion (image-pickup-side statistical information generation portion 16i or 16iA) which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and a transmission portion (8 or 8B) which transmits the event-related influence presence/absence data and the image-pickup-related influence presence/absence data.

With the configuration described above, for the sensor unit as the mixed sensor in which the event sensor portion and the image pickup sensor portion are mounted, it is possible to output the influence presence/absence data indicating the presence/absence of an influence of a noise source to a subsequent processing portion, in correspondence with a case where noise components are included in the event data obtained by the event sensor portion and the captured image data obtained by the image pickup sensor portion.

Therefore, it becomes possible for the subsequent processing portion to perform appropriate noise countermeasure processing.

Furthermore, in the image pickup device as the embodiment, the image-pickup-related influence presence/absence data generation portion performs the determination on whether or not the readout operation of the event signal has been executed at the time of the readout of the light-receiving signal, for each of the image pickup pixels.

This makes it possible to obtain information indicating the presence/absence of an influence of noise due to the event signal readout at a granularity of a pixel unit for the captured image data by the image pickup sensor portion.

Therefore, it is possible to improve the accuracy of the image-pickup-related influence presence/absence data, and improve the accuracy of the countermeasure processing to be performed by the subsequent processing portion.

Furthermore, in the image pickup device as the embodiment, the image-pickup-related influence presence/absence data generation portion generates statistical information related to the presence/absence of the influence of noise as the image-pickup-related influence presence/absence data.

This makes it possible to output statistical information related to the presence/absence of an influence of noise to the subsequent processing portion. For example, it is possible to output, regarding the presence/absence of an influence of noise, information indicating statistics based on a certain space such as an image plane, information indicating statistics based on a certain period such as a period of a plurality of consecutive frames, and/or the like.

This makes it possible to output appropriate image-pickup-related influence presence/absence data corresponding to the mode of the countermeasure processing performed by the subsequent processing portion.

Furthermore, in the image pickup device as the embodiment, the image-pickup-related influence presence/absence data generation portion generates, as the statistical information, information indicating a degree of the influence of noise for each area formed by dividing a sensing surface of the image pickup sensor portion.

This makes it possible to output the image-pickup-related influence presence/absence data indicating the degree of the influence of noise for each area, in correspondence with the case where the subsequent processing portion performs processing for each area of a captured image.

This is therefore suitable for a case where the subsequent processing portion performs processing for each area.

Furthermore, in the image pickup device as the embodiment, the image-pickup-related influence presence/absence data generation portion generates, as the statistical information, information indicating a degree of the influence of noise for each horizontal line of the image pickup sensor portion (see Fig. 15).

This makes it possible to output the image-pickup-related influence presence/absence data indicating the degree of the influence of noise for each horizontal line, in correspondence with the case where the subsequent processing portion performs processing for each horizontal line of the captured image.

This is therefore suitable for a case where the subsequent processing portion performs processing for each horizontal line.

Furthermore, in the image pickup device (1B) as the embodiment, the transmission portion (8B) stores captured image data obtained on the basis of the light-receiving signal, event data obtained on the basis of the event signal, the event-related influence presence/absence data, and the image-pickup-related influence presence/absence data in a same transmission frame for transmission (see Figs. 24 and 25).

Thus, it is possible to transmit the captured image data and event data for each unit period and the influence presence/absence data for those pieces of data via a single transmission system, and reduce the number of communication cables required when data transmission to the subsequent processing portion is performed via wires.

Furthermore, in the image pickup device (1A) as the embodiment, the sensor unit (3A) includes an electronic circuit portion (20) which performs processing that targets at least one of captured image data obtained on the basis of the light-receiving signal or event data obtained on the basis of the event signal, and the event-related influence presence/absence data generation portion (event-side statistical information generation portion 16eA) generates the event-related influence presence/absence data on the basis of a result of determining whether or not at least one of the readout operation by the image pickup sensor portion or the processing of the electronic circuit portion has been executed at the time of the event detection by the event sensor portion.

Thus, in correspondence with the case where noise components are superimposed on the event data also by the operation of the electronic circuit portion mounted on the sensor unit together with the event sensor portion and the image pickup sensor portion, data that appropriately indicates the presence/absence of an influence of noise can be generated as the event-related influence presence/absence data.

Furthermore, in the image pickup device (1A) as the embodiment, the sensor unit includes an electronic circuit portion which performs processing that targets at least one of captured image data obtained on the basis of the light-receiving signal or event data obtained on the basis of the event signal, and the image-pickup-related influence presence/absence data generation portion (image-pickup-side statistical information generation portion 16iA) generates the image-pickup-related influence presence/absence data on the basis of a result of determining whether or not at least one of the readout operation of the event signal or the processing of the electronic circuit portion has been executed at the time of the readout of the light-receiving signal by the image pickup sensor portion.

Thus, in correspondence with the case where noise components are superimposed on the captured image data also by the operation of the electronic circuit portion mounted on the sensor unit together with the event sensor portion and the image pickup sensor portion, data that appropriately indicates the presence/absence of an influence of noise can be generated as the image-pickup-related influence presence/absence data.

Furthermore, in the image pickup device as the embodiment, the electronic circuit portion is a circuit portion that performs image processing that targets the captured image data obtained on the basis of the light-receiving signal.

When the electronic circuit portion mounted on the sensor unit together with the event sensor portion and the image pickup sensor portion is an electronic circuit portion that performs image processing, there is a fear that noise components will be superimposed on the event data and/or captured image data due to the processing operation of the electronic circuit portion.

Therefore, in generating the influence presence/absence data, it is favorable to consider not only whether or not the readout operation of the other sensor portion has been performed, but also whether or not the processing of the electronic circuit portion has been executed.

Furthermore, in the image pickup device as the embodiment, the electronic circuit portion is a circuit portion of a semiconductor memory.

When the electronic circuit portion mounted on the sensor unit together with the event sensor portion and the image pickup sensor portion is a circuit portion of a semiconductor memory, there is a fear that noise components will be superimposed on the event data and/or captured image data due to operations of reading, writing, and/or the like from/to the semiconductor memory by the circuit portion.

Therefore, in generating the influence presence/absence data, it is favorable to consider not only whether or not the readout operation of the other sensor portion has been performed, but also whether or not the processing of the electronic circuit portion has been executed.

Furthermore, in the image pickup device as the embodiment, the sensor unit includes a plurality of semiconductor layers, and the event sensor portion and the image pickup sensor portion are formed in different semiconductor layers.

When the event sensor portion and the image pickup sensor portion are in a stacked relationship, signal readout operations thereof are apt to become noise sources for each other.

Therefore, it is favorable to generate and transmit the influence presence/absence data that is based on the presence/absence of signal readout by the other sensor for both the event data and the captured image data.

Furthermore, the image pickup device as the present embodiment further includes: a data processing portion (5) which is input with at least one of event data obtained on the basis of the event signal or captured image data obtained on the basis of the light-receiving signal from the sensor unit, and performs, as processing that targets input data as the data that has been input, processing that is based on influence presence/absence data corresponding to the input data out of the event-related influence presence/absence data and the image-pickup-related influence presence/absence data.

Thus, noise countermeasure processing that uses the corresponding influence presence/absence data can be performed at the subsequent stage of the sensor unit for at least one of the event data or the captured image data obtained by the sensor unit as the mixed sensor.

Furthermore, in the image pickup device as the embodiment, the data processing portion performs processing of adjusting a likelihood calculated as an inference result of AI processing that is performed while targeting the input data, on the basis of the influence presence/absence data.

Thus, for the AI processing such as image recognition processing that targets the captured image data and/or event data, it possible to adjust the likelihood of the inference processing in accordance with a degree of noise superposition in the input data, the adjustment involving an adjustment to lower the likelihood of recognition processing that targets an area with a large amount of noise, and/or the like, for example.

Therefore, it is possible to obtain an appropriate inference result that take into account the reliability of the input data, and improve the accuracy of the AI processing.

Furthermore, in the image pickup device as the embodiment, the data processing portion performs processing of adjusting an intensity of noise reduction processing that is performed while targeting the input data, on the basis of the influence presence/absence data.

Thus, for the noise reduction processing that uses the captured image data and/or event data as input data, it becomes possible to perform appropriate noise reduction processing corresponding to the degree of noise superposition in the input data, such as increasing the noise reduction effect when there is a large amount of noise in the input data, for example.

Therefore, it is possible to achieve appropriate noise reduction processing for the captured image data and event data obtained by the sensor unit.

Furthermore, in the image pickup device as the embodiment, the data processing portion performs frame decimation processing that is based on the influence presence/absence data for the input data obtained in a predetermined frame unit.

Thus, for the captured image data and/or event data input by the sensor unit, it becomes possible to perform appropriate frame decimation processing according to the degree of noise superposition in the input data, such as decimating frames so that data of a frame with a large amount of noise is not used in subsequent processing, for example.

Therefore, it is possible to achieve appropriate noise countermeasure processing for the event data and captured image data obtained by the sensor unit.

A data processing method as the embodiment is a data processing method in a sensor unit including an event sensor portion which has event detection pixels for detecting a change of a light-receiving amount as an event arrayed two-dimensionally, and generates an event signal indicating a detection result of the event, and an image pickup sensor portion which has image pickup pixels arrayed two-dimensionally and obtains a captured image, the image pickup pixels including photoelectric conversion elements and generating a light-receiving signal indicating a light-receiving amount, the data processing method including: performing processing of generating, on the basis of a result of determining whether or not a readout operation by the image pickup sensor portion has been executed at a time of the event detection by the event sensor portion, event-related influence presence/absence data indicating presence/absence of an influence of noise with respect to the event signal, and processing of generating, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal; and performing processing of transmitting the event-related influence presence/absence data and the image-pickup-related influence presence/absence data that have been generated.

Also by such a data processing method, operations and effects similar to those of the image pickup device as the embodiment described above can be obtained.

An information processing apparatus as the embodiment includes: a data processing portion (5) which is input with, from a sensor unit including an event sensor portion which has event detection pixels for detecting a change of a light-receiving amount as an event arrayed two-dimensionally, and generates an event signal indicating a detection result of the event, an image pickup sensor portion which has image pickup pixels arrayed two-dimensionally and obtains a captured image, the image pickup pixels including photoelectric conversion elements and generating a light-receiving signal indicating a light-receiving amount, an event-related influence presence/absence data generation portion which generates, on the basis of a result of determining whether or not a readout operation by the image pickup sensor portion has been executed at a time of the event detection by the event sensor portion, event-related influence presence/absence data indicating presence/absence of an influence of noise with respect to the event signal, an image-pickup-related influence presence/absence data generation portion which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and a transmission portion which transmits the event-related influence presence/absence data and the image-pickup-related influence presence/absence data, at least one of event data obtained on the basis of the event signal or captured image data obtained on the basis of the light-receiving signal, and performs, as processing that targets input data as the data that has been input, processing that is based on influence presence/absence data corresponding to the input data out of the event-related influence presence/absence data and the image-pickup-related influence presence/absence data.

Thus, for at least one of the event data or the captured image data obtained by the sensor unit as the mixed sensor, processed that is based on the corresponding influence presence/absence data is performed at a subsequent stage of the sensor unit.

Therefore, when the event data and captured image data output by the sensor unit on which the event sensor and the image pickup sensor are mounted include noise components, the subsequent processing portion can perform appropriate noise countermeasure processing.

An information processing method as the embodiment is an information processing method including: inputting, by an information processing apparatus, from a sensor unit including an event sensor portion which has event detection pixels for detecting a change of a light-receiving amount as an event arrayed two-dimensionally, and generates an event signal indicating a detection result of the event, an image pickup sensor portion which has image pickup pixels arrayed two-dimensionally and obtains a captured image, the image pickup pixels including photoelectric conversion elements and generating a light-receiving signal indicating a light-receiving amount, an event-related influence presence/absence data generation portion which generates, on the basis of a result of determining whether or not a readout operation by the image pickup sensor portion has been executed at a time of the event detection by the event sensor portion, event-related influence presence/absence data indicating presence/absence of an influence of noise with respect to the event signal, an image-pickup-related influence presence/absence data generation portion which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and a transmission portion which transmits the event-related influence presence/absence data and the image-pickup-related influence presence/absence data, at least one of event data obtained on the basis of the event signal or captured image data obtained on the basis of the light-receiving signal, and performing, as processing that targets input data as the data that has been input, processing that is based on influence presence/absence data corresponding to the input data out of the event-related influence presence/absence data and the image-pickup-related influence presence/absence data.

Also by such an information processing method, operations and effects similar to those of the information processing apparatus as the embodiment described above can be obtained.

Here, as the embodiment, a program that causes, for example, a CPU, a DSP, or a device including these to execute the processing as the data processing portion 5 described above, or a recording medium on which the program is recorded are conceivable.

In other words, the recording medium as the embodiment is a recording medium on which a program readable by a computer device is recorded, the program causing the computer device to realize a function of: inputting, from a sensor unit including an event sensor portion which has event detection pixels for detecting a change of a light-receiving amount as an event arrayed two-dimensionally, and generates an event signal indicating a detection result of the event, an image pickup sensor portion which has image pickup pixels arrayed two-dimensionally and obtains a captured image, the image pickup pixels including photoelectric conversion elements and generating a light-receiving signal indicating a light-receiving amount, an event-related influence presence/absence data generation portion which generates, on the basis of a result of determining whether or not a readout operation by the image pickup sensor portion has been executed at a time of the event detection by the event sensor portion, event-related influence presence/absence data indicating presence/absence of an influence of noise with respect to the event signal, an image-pickup-related influence presence/absence data generation portion which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and a transmission portion which transmits the event-related influence presence/absence data and the image-pickup-related influence presence/absence data, at least one of event data obtained on the basis of the event signal or captured image data obtained on the basis of the light-receiving signal, and performing, as processing that targets input data as the data that has been input, processing that is based on influence presence/absence data corresponding to the input data out of the event-related influence presence/absence data and the image-pickup-related influence presence/absence data.

By using such a recording medium, the functions of the data processing portion as the embodiment described above can be achieved by software processing in equipment that serves as the computer device.

The recording medium as described above can be realized as an HDD (Hard Disk Drive) built into the equipment such as the computer device, a ROM in a microcomputer including a CPU, and/or the like.

Alternatively, a form as a removable recording medium such as a flexible disk, a CD-ROM (Compact Disc Read Only Memory), an MO (Magneto Optical) disc, a DVD (Digital Versatile Disc), a Blu-ray Disc^{®}, a magnetic disk, a semiconductor memory, or a memory card is also conceivable. Such a removable recording medium can be provided as so-called packaged software.

It is noted that the effects described in the present specification are mere examples and are not limited, and other effects may also be exerted.

Furthermore, the examples described above may be combined in any way, and even when various combinations are used, the various operations and effects described above can be obtained.

### <5. Present technology>

It is noted that the present technology can also take the following configurations.
(1) An image pickup device, including:
   a sensor unit including
   an event sensor portion which has event detection pixels for detecting a change of a light-receiving amount as an event arrayed two-dimensionally, and generates an event signal indicating a detection result of the event,
   an image pickup sensor portion which has image pickup pixels arrayed two-dimensionally and obtains a captured image, the image pickup pixels including photoelectric conversion elements and generating a light-receiving signal indicating a light-receiving amount,
   an event-related influence presence/absence data generation portion which generates, on the basis of a result of determining whether or not a readout operation by the image pickup sensor portion has been executed at a time of the event detection by the event sensor portion, event-related influence presence/absence data indicating presence/absence of an influence of noise with respect to the event signal,
   an image-pickup-related influence presence/absence data generation portion which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and
   a transmission portion which transmits the event-related influence presence/absence data and the image-pickup-related influence presence/absence data.
(2) The image pickup device according to (1), in which
   the image-pickup-related influence presence/absence data generation portion performs the determination on whether or not the readout operation of the event signal has been executed at the time of the readout of the light-receiving signal, for each of the image pickup pixels.
(3) The image pickup device according to (1) or (2), in which
   the image-pickup-related influence presence/absence data generation portion generates statistical information related to the presence/absence of the influence of noise as the image-pickup-related influence presence/absence data.
(4) The image pickup device according to (3), in which
   the image-pickup-related influence presence/absence data generation portion generates, as the statistical information, information indicating a degree of the influence of noise for each area formed by dividing a sensing surface of the image pickup sensor portion.
(5) The image pickup device according to (3), in which
   the image-pickup-related influence presence/absence data generation portion generates, as the statistical information, information indicating a degree of the influence of noise for each horizontal line of the image pickup sensor portion.
(6) The image pickup device according to any one of (1) to (5), in which
   the transmission portion stores captured image data obtained on the basis of the light-receiving signal, event data obtained on the basis of the event signal, the event-related influence presence/absence data, and the image-pickup-related influence presence/absence data in a same transmission frame for transmission.
(7) The image pickup device according to any one of (1) to (6), in which
   the sensor unit includes an electronic circuit portion which performs processing that targets at least one of captured image data obtained on the basis of the light-receiving signal or event data obtained on the basis of the event signal, and
   the event-related influence presence/absence data generation portion generates the event-related influence presence/absence data on the basis of a result of determining whether or not at least one of the readout operation by the image pickup sensor portion or the processing of the electronic circuit portion has been executed at the time of the event detection by the event sensor portion.
(8) The image pickup device according to any one of (1) to (7), in which
   the sensor unit includes an electronic circuit portion which performs processing that targets at least one of captured image data obtained on the basis of the light-receiving signal or event data obtained on the basis of the event signal, and
   the image-pickup-related influence presence/absence data generation portion generates the image-pickup-related influence presence/absence data on the basis of a result of determining whether or not at least one of the readout operation of the event signal or the processing of the electronic circuit portion has been executed at the time of the readout of the light-receiving signal by the image pickup sensor portion.
(9) The image pickup device according to (7) or (8), in which
   the electronic circuit portion is a circuit portion that performs image processing that targets the captured image data obtained on the basis of the light-receiving signal.
(10) The image pickup device according to (7) or (8), in which
   the electronic circuit portion is a circuit portion of a semiconductor memory.
(11) The image pickup device according to any one of (1) to (10), in which
   the sensor unit includes a plurality of semiconductor layers, and
   the event sensor portion and the image pickup sensor portion are formed in different semiconductor layers.
(12) The image pickup device according to any one of (1) to (11), further including:
   a data processing portion which is input with at least one of event data obtained on the basis of the event signal or captured image data obtained on the basis of the light-receiving signal from the sensor unit, and performs, as processing that targets input data as the data that has been input, processing that is based on influence presence/absence data corresponding to the input data out of the event-related influence presence/absence data and the image-pickup-related influence presence/absence data.
(13) The image pickup device according to (12), in which
   the data processing portion performs processing of adjusting a likelihood calculated as an inference result of AI processing that is performed while targeting the input data, on the basis of the influence presence/absence data.
(14) The image pickup device according to (12) or (13), in which
   the data processing portion performs processing of adjusting an intensity of noise reduction processing that is performed while targeting the input data, on the basis of the influence presence/absence data.
(15) The image pickup device according to any one of (12) to (14), in which
   the data processing portion performs frame decimation processing that is based on the influence presence/absence data for the input data obtained in a predetermined frame unit.
(16) A data processing method in a sensor unit including an event sensor portion which has event detection pixels for detecting a change of a light-receiving amount as an event arrayed two-dimensionally, and generates an event signal indicating a detection result of the event, and an image pickup sensor portion which has image pickup pixels arrayed two-dimensionally and obtains a captured image, the image pickup pixels including photoelectric conversion elements and generating a light-receiving signal indicating a light-receiving amount, the data processing method including:
   performing processing of generating, on the basis of a result of determining whether or not a readout operation by the image pickup sensor portion has been executed at a time of the event detection by the event sensor portion, event-related influence presence/absence data indicating presence/absence of an influence of noise with respect to the event signal, and processing of generating, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal; and
   performing processing of transmitting the event-related influence presence/absence data and the image-pickup-related influence presence/absence data that have been generated.
(17) An information processing apparatus, including:
   a data processing portion which is input with, from a sensor unit including an event sensor portion which has event detection pixels for detecting a change of a light-receiving amount as an event arrayed two-dimensionally, and generates an event signal indicating a detection result of the event, an image pickup sensor portion which has image pickup pixels arrayed two-dimensionally and obtains a captured image, the image pickup pixels including photoelectric conversion elements and generating a light-receiving signal indicating a light-receiving amount, an event-related influence presence/absence data generation portion which generates, on the basis of a result of determining whether or not a readout operation by the image pickup sensor portion has been executed at a time of the event detection by the event sensor portion, event-related influence presence/absence data indicating presence/absence of an influence of noise with respect to the event signal, an image-pickup-related influence presence/absence data generation portion which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and a transmission portion which transmits the event-related influence presence/absence data and the image-pickup-related influence presence/absence data, at least one of event data obtained on the basis of the event signal or captured image data obtained on the basis of the light-receiving signal, and performs, as processing that targets input data as the data that has been input, processing that is based on influence presence/absence data corresponding to the input data out of the event-related influence presence/absence data and the image-pickup-related influence presence/absence data.
(18) An information processing method, including:
   inputting, by an information processing apparatus, from a sensor unit including an event sensor portion which has event detection pixels for detecting a change of a light-receiving amount as an event arrayed two-dimensionally, and generates an event signal indicating a detection result of the event, an image pickup sensor portion which has image pickup pixels arrayed two-dimensionally and obtains a captured image, the image pickup pixels including photoelectric conversion elements and generating a light-receiving signal indicating a light-receiving amount, an event-related influence presence/absence data generation portion which generates, on the basis of a result of determining whether or not a readout operation by the image pickup sensor portion has been executed at a time of the event detection by the event sensor portion, event-related influence presence/absence data indicating presence/absence of an influence of noise with respect to the event signal, an image-pickup-related influence presence/absence data generation portion which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and a transmission portion which transmits the event-related influence presence/absence data and the image-pickup-related influence presence/absence data, at least one of event data obtained on the basis of the event signal or captured image data obtained on the basis of the light-receiving signal, and performing, as processing that targets input data as the data that has been input, processing that is based on influence presence/absence data corresponding to the input data out of the event-related influence presence/absence data and the image-pickup-related influence presence/absence data.
(19) A recording medium on which a program readable by a computer device is recorded, the program causing the computer device to realize a function of:
   inputting, from a sensor unit including an event sensor portion which has event detection pixels for detecting a change of a light-receiving amount as an event arrayed two-dimensionally, and generates an event signal indicating a detection result of the event, an image pickup sensor portion which has image pickup pixels arrayed two-dimensionally and obtains a captured image, the image pickup pixels including photoelectric conversion elements and generating a light-receiving signal indicating a light-receiving amount, an event-related influence presence/absence data generation portion which generates, on the basis of a result of determining whether or not a readout operation by the image pickup sensor portion has been executed at a time of the event detection by the event sensor portion, event-related influence presence/absence data indicating presence/absence of an influence of noise with respect to the event signal, an image-pickup-related influence presence/absence data generation portion which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and a transmission portion which transmits the event-related influence presence/absence data and the image-pickup-related influence presence/absence data, at least one of event data obtained on the basis of the event signal or captured image data obtained on the basis of the light-receiving signal, and performing, as processing that targets input data as the data that has been input, processing that is based on influence presence/absence data corresponding to the input data out of the event-related influence presence/absence data and the image-pickup-related influence presence/absence data.

### Reference Signs List

1, 1A, 1B image pickup device
2e event detection optical system
2i image pickup optical system
3, 3A, 3B sensor unit
5 data processing portion
5e event data processing portion
5i captured data processing portion
6 event sensor portion
7 image pickup sensor portion
8, 8B transmission portion
8e event data transmission portion
8i captured data transmission portion
Ls semiconductor layer
Ls1 first semiconductor layer
Ls2 second semiconductor layer
Pe event detection pixel
Pi image pickup pixel
10e, 10i pixel array portion
15e event-side readout portion
15i image-pickup-side readout portion
16e, 16eA, 16eC event-side statistical information generation portion
16i, 16iA image-pickup-side statistical information generation portion
17e event-side readout presence/absence signal generation portion
17i image-pickup-side readout presence/absence signal generation portion
Dst start data
Den end data
Da, Db, Dc, Dd, De, Df minimum unit data
Ar area
Ar1 to Ar9 first area to ninth area
20 electronic circuit portion
21 circuit operation presence/absence signal generation portion

## Claims

1. An image pickup device, comprising:
a sensor unit including
an event sensor portion which has event detection pixels for detecting a change of a light-receiving amount as an event arrayed two-dimensionally, and generates an event signal indicating a detection result of the event,
an image pickup sensor portion which has image pickup pixels arrayed two-dimensionally and obtains a captured image, the image pickup pixels including photoelectric conversion elements and generating a light-receiving signal indicating a light-receiving amount,
an event-related influence presence/absence data generation portion which generates, on a basis of a result of determining whether or not a readout operation by the image pickup sensor portion has been executed at a time of the event detection by the event sensor portion, event-related influence presence/absence data indicating presence/absence of an influence of noise with respect to the event signal,
an image-pickup-related influence presence/absence data generation portion which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and
a transmission portion which transmits the event-related influence presence/absence data and the image-pickup-related influence presence/absence data.

2. The image pickup device according to claim 1, wherein
the image-pickup-related influence presence/absence data generation portion performs the determination on whether or not the readout operation of the event signal has been executed at the time of the readout of the light-receiving signal, for each of the image pickup pixels.

3. The image pickup device according to claim 1, wherein
the image-pickup-related influence presence/absence data generation portion generates statistical information related to the presence/absence of the influence of noise as the image-pickup-related influence presence/absence data.

4. The image pickup device according to claim 3, wherein
the image-pickup-related influence presence/absence data generation portion generates, as the statistical information, information indicating a degree of the influence of noise for each area formed by dividing a sensing surface of the image pickup sensor portion.

5. The image pickup device according to claim 3, wherein
the image-pickup-related influence presence/absence data generation portion generates, as the statistical information, information indicating a degree of the influence of noise for each horizontal line of the image pickup sensor portion.

6. The image pickup device according to claim 1, wherein
the transmission portion stores captured image data obtained on the basis of the light-receiving signal, event data obtained on the basis of the event signal, the event-related influence presence/absence data, and the image-pickup-related influence presence/absence data in a same transmission frame for transmission.

7. The image pickup device according to claim 1, wherein
the sensor unit includes an electronic circuit portion which performs processing that targets at least one of captured image data obtained on the basis of the light-receiving signal or event data obtained on the basis of the event signal, and
the event-related influence presence/absence data generation portion generates the event-related influence presence/absence data on the basis of a result of determining whether or not at least one of the readout operation by the image pickup sensor portion or the processing of the electronic circuit portion has been executed at the time of the event detection by the event sensor portion.

8. The image pickup device according to claim 1, wherein
the sensor unit includes an electronic circuit portion which performs processing that targets at least one of captured image data obtained on the basis of the light-receiving signal or event data obtained on the basis of the event signal, and
the image-pickup-related influence presence/absence data generation portion generates the image-pickup-related influence presence/absence data on the basis of a result of determining whether or not at least one of the readout operation of the event signal or the processing of the electronic circuit portion has been executed at the time of the readout of the light-receiving signal by the image pickup sensor portion.

9. The image pickup device according to claim 7 or 8, wherein
the electronic circuit portion is a circuit portion that performs image processing that targets the captured image data obtained on the basis of the light-receiving signal.

10. The image pickup device according to claim 7 or 8, wherein
the electronic circuit portion is a circuit portion of a semiconductor memory.

11. The image pickup device according to claim 1, wherein
the sensor unit includes a plurality of semiconductor layers, and
the event sensor portion and the image pickup sensor portion are formed in different semiconductor layers.

12. The image pickup device according to claim 1, further comprising:
a data processing portion which is input with at least one of event data obtained on the basis of the event signal or captured image data obtained on the basis of the light-receiving signal from the sensor unit, and performs, as processing that targets input data as the data that has been input, processing that is based on influence presence/absence data corresponding to the input data out of the event-related influence presence/absence data and the image-pickup-related influence presence/absence data.

13. The image pickup device according to claim 12, wherein
the data processing portion performs processing of adjusting a likelihood calculated as an inference result of AI processing that is performed while targeting the input data, on the basis of the influence presence/absence data.

14. The image pickup device according to claim 12, wherein
the data processing portion performs processing of adjusting an intensity of noise reduction processing that is performed while targeting the input data, on the basis of the influence presence/absence data.

15. The image pickup device according to claim 12, wherein
the data processing portion performs frame decimation processing that is based on the influence presence/absence data for the input data obtained in a predetermined frame unit.

16. A data processing method in a sensor unit including an event sensor portion which has event detection pixels for detecting a change of a light-receiving amount as an event arrayed two-dimensionally, and generates an event signal indicating a detection result of the event, and an image pickup sensor portion which has image pickup pixels arrayed two-dimensionally and obtains a captured image, the image pickup pixels including photoelectric conversion elements and generating a light-receiving signal indicating a light-receiving amount, the data processing method comprising:
performing processing of generating, on a basis of a result of determining whether or not a readout operation by the image pickup sensor portion has been executed at a time of the event detection by the event sensor portion, event-related influence presence/absence data indicating presence/absence of an influence of noise with respect to the event signal, and processing of generating, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal; and
performing processing of transmitting the event-related influence presence/absence data and the image-pickup-related influence presence/absence data that have been generated.

17. An information processing apparatus, comprising:
a data processing portion which is input with, from a sensor unit including an event sensor portion which has event detection pixels for detecting a change of a light-receiving amount as an event arrayed two-dimensionally, and generates an event signal indicating a detection result of the event, an image pickup sensor portion which has image pickup pixels arrayed two-dimensionally and obtains a captured image, the image pickup pixels including photoelectric conversion elements and generating a light-receiving signal indicating a light-receiving amount, an event-related influence presence/absence data generation portion which generates, on a basis of a result of determining whether or not a readout operation by the image pickup sensor portion has been executed at a time of the event detection by the event sensor portion, event-related influence presence/absence data indicating presence/absence of an influence of noise with respect to the event signal, an image-pickup-related influence presence/absence data generation portion which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and a transmission portion which transmits the event-related influence presence/absence data and the image-pickup-related influence presence/absence data, at least one of event data obtained on the basis of the event signal or captured image data obtained on the basis of the light-receiving signal, and performs, as processing that targets input data as the data that has been input, processing that is based on influence presence/absence data corresponding to the input data out of the event-related influence presence/absence data and the image-pickup-related influence presence/absence data.

18. An information processing method, comprising:
inputting, by an information processing apparatus, from a sensor unit including an event sensor portion which has event detection pixels for detecting a change of a light-receiving amount as an event arrayed two-dimensionally, and generates an event signal indicating a detection result of the event, an image pickup sensor portion which has image pickup pixels arrayed two-dimensionally and obtains a captured image, the image pickup pixels including photoelectric conversion elements and generating a light-receiving signal indicating a light-receiving amount, an event-related influence presence/absence data generation portion which generates, on a basis of a result of determining whether or not a readout operation by the image pickup sensor portion has been executed at a time of the event detection by the event sensor portion, event-related influence presence/absence data indicating presence/absence of an influence of noise with respect to the event signal, an image-pickup-related influence presence/absence data generation portion which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and a transmission portion which transmits the event-related influence presence/absence data and the image-pickup-related influence presence/absence data, at least one of event data obtained on the basis of the event signal or captured image data obtained on the basis of the light-receiving signal, and performing, as processing that targets input data as the data that has been input, processing that is based on influence presence/absence data corresponding to the input data out of the event-related influence presence/absence data and the image-pickup-related influence presence/absence data.

19. A recording medium on which a program readable by a computer device is recorded, the program causing the computer device to realize a function of:
inputting, from a sensor unit including an event sensor portion which has event detection pixels for detecting a change of a light-receiving amount as an event arrayed two-dimensionally, and generates an event signal indicating a detection result of the event, an image pickup sensor portion which has image pickup pixels arrayed two-dimensionally and obtains a captured image, the image pickup pixels including photoelectric conversion elements and generating a light-receiving signal indicating a light-receiving amount, an event-related influence presence/absence data generation portion which generates, on a basis of a result of determining whether or not a readout operation by the image pickup sensor portion has been executed at a time of the event detection by the event sensor portion, event-related influence presence/absence data indicating presence/absence of an influence of noise with respect to the event signal, an image-pickup-related influence presence/absence data generation portion which generates, on the basis of a result of determining whether or not a readout operation of the event signal has been executed at a time of readout of the light-receiving signal by the image pickup sensor portion, image-pickup-related influence presence/absence data indicating presence/absence of an influence of noise with respect to the light-receiving signal, and a transmission portion which transmits the event-related influence presence/absence data and the image-pickup-related influence presence/absence data, at least one of event data obtained on the basis of the event signal or captured image data obtained on the basis of the light-receiving signal, and performing, as processing that targets input data as the data that has been input, processing that is based on influence presence/absence data corresponding to the input data out of the event-related influence presence/absence data and the image-pickup-related influence presence/absence data.
